(19) Europäisches Patentamt
European Patent Office
Office européen des brevets

(11) **EP 2 985 992 A1**

(12) **EUROPEAN PATENT APPLICATION**

(43) Date of publication:
**17.02.2016 Bulletin 2016/07**

(51) Int Cl.:
***H04N 5/369*** (2011.01)          ***H04N 5/3745*** (2011.01)

(21) Application number: **14180880.8**

(22) Date of filing: **13.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Fraunhofer-Gesellschaft zur Förderung der angewandten Forschung e.V.**
  **80686 München (DE)**
• **Technische Universität Ilmenau**
  **98684 Ilmenau (DE)**

(72) Inventors:
• **Del Galdo, Giovanni**
  **98693 Martinroda (DE)**

• **Großmann, Marcus**
  **99894 Friedrichroda (DE)**
• **Römer, Florian**
  **98693 Ilmenau (DE)**
• **Neubauer, Harald**
  **91052 Erlangen (DE)**
• **Schöberl, Michael**
  **91058 Erlangen (DE)**
• **Uhrmann, Franz**
  **91056 Erlangen (DE)**

(74) Representative: **Zinkler, Franz**
  **Schoppe, Zimmermann, Stöckeler**
  **Zinkler, Schenk & Partner mbB**
  **Patentanwälte**
  **Radlkoferstrasse 2**
  **81373 München (DE)**

(54) **Apparatus and method for providing an image**

(57) An apparatus for providing an image is provided. The apparatus comprises a sensor (110) comprising a plurality of sensor pixels, wherein each of the sensor pixels of the sensor (110) comprises one or more photosensitive elements, wherein each of the one or more photosensitive elements comprises a photosensitive area, wherein the sensor (110) is configured to provide image data comprising a plurality of first image pixels, and wherein each of the sensor pixels is configured to provide one of the first image pixels of the image data. Moreover, the apparatus comprises an image reconstructor (120; 220) for providing the image, wherein the image comprises a plurality of second image pixels, wherein the image reconstructor (120; 220) is configured to generate the second image pixels of the image depending on the first image pixels of the image data, wherein the number of the first image pixels of the image data is smaller than the number of the second image pixels of the image data, wherein the image reconstructor (120; 220) is configured to generate each of a group of one or more of the second image pixels depending on at least two of the first image pixels. At least one of the sensor pixels of the sensor (110) comprises two or more photosensitive elements being connected such that said one of the first image pixels provided by said sensor pixel depends on each of the two or more photosensitive elements. Or, the photosensitive area of a first one of the photosensitive elements of the sensor pixels of the sensor (110) has a first shape being different from a second shape of the photosensitive area of a second one of the photosensitive elements of the sensor pixels, wherein said first shape is concave.

FIG 1

**Description**

The present invention relates to image acquisition, and, in particular, to an apparatus and method for providing an image.

Basically, an image sensor operates based on the following basic principle. The area of the sensor is divided into equally spaced rows and columns, whose intersection makes up a 2-D array of elements called sensor pixels. In each sensor pixel, a photosensitive element (photodiode (PD)) captures light and converts it into charge. In some technologies, e.g., in modern CMOS image sensors, this charge is transferred into a capacitance (floating diffusion (FD)) that allows to measure the amount of transferred charge by a proportional change of its potential via a voltage difference measurement.

A few terms and definitions should be explained, first.

A "sensor", can be considered as an apparatus which converts incident light from an optical device, e.g., a lens, into a sequence of digitally encoded values, each value corresponding to a quantity, e.g., an electrical voltage, read from one sensor pixel.

A "sensor pixel" is an elementary component of the sensor which captures light within a certain area of the sensor and converts it into a quantity that can be read electronically, e.g., a voltage. In a traditional camera, this sensor pixel directly corresponds to an image pixel. In this invention, this is not necessarily the case.

A sensor pixel (a physical element / hardware element) provides image information, which is referred to as "first image pixel". This information can be considered as the raw and unprocessed, measured data.

When referring to an "image", it should be noted that the output of the image acquisition system is an image, which is defined as a representation of a naturally existing phenomenon, as it is seen through an optical device, e.g., a lens, given by a matrix of so-called second image pixels arranged in a regular grid of rows and columns, where each of the second image pixels encodes a local image information.

According to some of the state-of-the-art technologies, the first image pixels provided by the sensor pixels, may be processed (for example, the brightness of each of the first image pixels may be increased or lowered, or, e.g., some other pixel processing may take place) to obtain the second image pixels of the resulting image.

So when referring to a "second image pixel", it should be noted that such a second image pixel indicates an elementary component of the resulting image corresponding to a certain row and column of the image and encoding local image information in form of, e.g., a brightness value or several brightness values assigned to different optical wavelength regions, such that, for example, color information can be retrieved.

In the following, the term "second image pixels" is used to outline, that the image pixels of the resulting image may (but do not necessarily have to) be different from the first image pixels which are provided by the sensor pixels of the sensor.

The term "fill factor" may, e.g., indicate a ratio between the area of the photosensitive part of the pixel to the overall pixel area

A photodiode (PD) and its technical details are well-known for a person skilled-in the art.

A "Floating Diffusion" (FD) or "Floating Diffusor" is an electrical component of a sensor pixel that stores the charge collected by the photodiode.

When referring to the term "reconstruction" this may, e.g., indicate a process to obtain an image, e.g., represented by its image pixels, from the values read out of the sensor pixels. The reconstruction may, e.g., be achieved by solving a numerical optimization problem.

It should be noted that the terms "sensor pixel" and "image pixel" describe two fundamentally different things. In general, the term "sensor pixel", may, e.g., refer to a photosensitive hardware element (a physical element), while the term "image pixel" may, e.g., refer to a particular kind of image data.

Returning to the above-described image sensor, there are a number of factors that limit the performance of such an imaging system in practice. Regarding the overall size of the sensor, it is mainly determined by the size of the sensor pixels. For many applications, it is desirable to reduce the size of the sensor as far as possible, e.g., for integrating digital cameras in small portable devices. However, as the sensor pixels shrink further and further, the effective area of the photosensitive elements shrinks as well. This may, e.g., lead to less incident light per sensor pixel, which ultimately limits the sensitivity of the imaging system as well as the dynamic range, since the full well capacity is reduced as well.

Moreover, sensor pixels may also require a certain amount of area that is not photosensitive. For example, in certain sensor technologies, e.g., front-side illuminated CMOS sensors, some space may, e.g., be required for the wiring. Since these electronics cannot be shrinked indefinitely, smaller sensor pixels usually lead to a smaller fill factor. This reduces the overall light efficiency of the sensor further.

It should be noted that this may, e.g., also pose some physical limits on the minimal required exposure time, which is critical in some applications, e.g., X-ray medical imaging, where the exposure time is directly linked to the radiation dose the patient is exposed to. Note that smaller sensor pixels also allow to increase the number of sensor pixel rows and columns per effective area of the overall sensor. For traditional imaging systems, there may, e.g., be a one-to-one correspondence between the number of sensor pixel rows and columns and the sensor's resolution (the number of image pixels it provides). Since in many applications a high resolution is very important, e.g., in digital cameras or in the 3-D surface scanning application, where the resolution determines the accuracy of the volumetric reconstruction, a large number of sensor pixels is typically desirable.

Regarding the speed at which the sensor can be read out, such a speed is limited. Since the readout as well as the A/D conversion require a certain time and the data rate that can be transmitted by the sensor is limited, this poses limits on the highest possible readout frequency for a certain number of sensor pixels.

Concerning the power consumption, the largest fraction of the power is used in the A/D converters, the units that transmit the serial bit stream, and the digital signal processing that follows after the acquisition of the images. Therefore, the power consumption also scales with the number of sensor pixels that have to be actively read.

Regarding these limits, it appears to be desirable to increase the size of the photosensitive area of the sensor pixels and to reduce the number of sensor pixels that we have to actively read out. However, traditional imaging techniques suffer from a reduction in the resolution as soon as we reduce the number of sensor pixels. Therefore, the present invention proposes a method to reduce the number of sensor pixels while preserving the resolution. The crucial point is to not simply increase the regular, rectangular area of the sensor pixels since this would lead to an integration of the incident light over a rectangular area, which corresponds to a low-pass filtering of the image, hence reducing the resolution. In contrast, we propose to make up sensor pixels out of irregularly shaped areas that fill the image in a mutually intertwining manner. In so doing, the high-frequency components of the image are preserved, which facilitates the recovery of the image in a higher resolution than traditional imaging systems would achieve for the same number of sensor pixels.

The underlying theory that explains under which conditions such a recovery is possible is provided by the field of Compressive Sensing (CS). In essence, Compressive Sensing allows to uniquely recover signals from a significantly reduced number of linear measurements/observations provided that the signals possess a certain structure that allows them to be compressed ("sparsity") and provided that the measurements are performed in a manner that allows the distinction of all signals (within the group of structured/sparse signals) from the compressed observations. In particular, it has been shown that a reasonable generic measurement strategy is given by performing linear combinations with coefficients drawn from a random distribution, for example, a Gaussian, a Bernoulli, or a Rademacher distribution.

There exist a number of patents and papers discussing image sensors based on irregular arrangement and/or shape of pixels, e.g. with respect to irregular CMOS sensors.

[BE+11] describes an image sensor made up of pixels shaped and arranged in an irregular (non-rectangular) way with the goal to achieve a resolution that is superior to the resolution obtained with a traditional image sensor made of the same number of pixels. Concretely, it is proposed to use an aperiodic Penrose tiling to divide the area of the sensor into pixels.

In [R+86], it is proposed to form an array out of sensing devices that have their barycenters distributed in a random, non-periodic pattern. The actual shapes of the PDs follow from the barycenters, making them as large as possible while providing sufficient isolation to the next sensing device, with the goal to equalize the areas of the sensing devices over the sensor areas. This design does not include non-convex, mutually intertwining sensor pixels and it does not allow non-contiguous effective photosensitive areas for a sensor pixel.

[Kik07] discloses to vary the density of the pixels over the sensor which results in an irregular sensor pixel geometry. The interval between adjacent pixels is varied based on the knowledge of the variation of the spatial transfer characteristics of the optical subsystem over the sensor area. More specifically, the intervals are found from the sensitivity distribution function over the sensor area with the goal to achieve a uniform sensitivity integral value.

[T+03] discloses a sensor with non-rectangular pixels for image tracking. Here, pixels are defined via intersections of rows and columns, which define areas called cell frames. Inside the cell frames, there is a light-sensitive element with a certain active area. This design does not allow mutually intertwining nor non-contiguous effective pixel areas.

A super-resolution system is disclosed in [Rob11]. This system provided there is able to find a high-resolution representation of an image by combining two or more lower resolution images captured with different modulation transfer functions. This approach is substantially different from the proposed sensor which does not require two or more lower resolution images but instead uses only a compressed image representation.

Irregular pixel geometries are also considered for display techniques, e.g., in [Sla09].

Moreover, the state of the art provides several other techniques to implement the Compressive Sensing concept into image sensors.

According to a first approach, digital micromirror devices (DMD) are used to reflect certain parts of the image towards the single sensors and others away from it [DDT+08]. Thereby, a linear combination of pixels across the whole image is achieved where the coefficients are either 1 (facing towards the sensor) or 0 (facing away). This technique requires actively moving components so that the overall image acquisition time is rather slow.

According to another approach, cameras perform an image transformation in the optical domain, e.g., via a pseudorandom mask behind the lens [SJ07] or a lens with a randomized light transfer behavior [FTF06]. This approach complicates the design and the calibration of the optical components.

According to a further approach, cameras achieve a light sensitivity variation by partly covering sensor elements, e.g., by spraying powder on the sensor [SHS13].

According to another approach, random linear combinations are performed in the electrical domain, e.g., between the photosensitive area and the electrical read-out [ZB10]. This requires the integration of adders, shift registers, or analog vector-matrix multipliers into the CMOS circuitry. This is undesirable since it hinders further miniaturization and consumes additional electrical power.

Moreover, according to a further approach, an irregular sampling grid is created by adding random displacements to the photosensitive areas of the pixels [MA09]. This design does not change the size of the pixels but only moves the photosensitive areas inside the area of the pixel, which is larger due to the peripheral circuitry. Regarding these approaches, see also [DDS13].

The object of the present invention is to provide improved concepts for image acquisition. The object of the present invention is solved by an apparatus according to claim 1, by a method according to claim 19 and by a computer program according to claim 20.

An apparatus for providing an image is provided. The apparatus comprises a sensor comprising a plurality of sensor pixels, wherein each of the sensor pixels of the sensor comprises one or more photosensitive elements, wherein each of the one or more photosensitive elements comprises a photosensitive area, wherein the sensor is configured to provide image data comprising a plurality of first image pixels, and wherein each of the sensor pixels is configured to provide one of the first image pixels of the image data. Moreover, the apparatus comprises an image reconstructor for providing the image, wherein the image comprises a plurality of second image pixels, wherein the image reconstructor is configured to generate the second image pixels of the image depending on the first image pixels of the image data, wherein the number of the first image pixels of the image data is smaller than the number of the second image pixels of the image data, wherein the image reconstructor is configured to generate each of a group of one or more of the second image pixels depending on at least two of the first image pixels. At least one of the sensor pixels of the sensor comprises two or more photosensitive elements being connected such that said one of the first image pixels provided by said sensor pixel depends on each of the two or more photosensitive elements. Or, the photosensitive area of a first one of the photosensitive elements of the sensor pixels of the sensor has a first shape being different from a second shape of the photosensitive area of a second one of the photosensitive elements of the sensor pixels, wherein said first shape is concave.

In an embodiment, said one of the sensor pixels of the sensor may, e.g., comprise said two or more photosensitive elements being connected such that said one of the first image pixels provided by said sensor pixel depends on each of the two or more photosensitive elements.

According to an embodiment, each of the sensor pixels of the sensor may, e.g., comprise two or more photosensitive elements being connected such that the first image pixel provided by said sensor pixel depends on each of the two or more photosensitive elements of said sensor pixel.

In an embodiment, the photosensitive area of said first one of the photosensitive elements of the sensor pixels may, e.g., have said first shape being different from said second shape of the photosensitive area of said second one of the photosensitive elements of the sensor pixels.

According to an embodiment, the photosensitive area of each of the photosensitive elements of each of the sensor pixels may, e.g., have a non-rectangular shape.

In an embodiment, each of the sensor pixels may, e.g., further comprise one or more capacitors, wherein each of the one or more photosensitive elements of each of the sensor pixels may, e.g., be configured to collect light, and to convert the light into electrical charge, and wherein said sensor pixel may, e.g., be configured to transfer said electrical charge into the one or more capacitors of said sensor pixel.

According to an embodiment, the image reconstructor may, e.g., be configured to generate each of the second image pixels of the image depending on at least two of the first image pixels.

In an embodiment, the photosensitive area of said first one of the photosensitive elements of the sensor pixels of the sensor may, e.g., have said first shape being different from said second shape of the photosensitive area of said second one of the photosensitive elements of the sensor pixels. In such an embodiment, the photosensitive area of said first one of the photosensitive elements of the sensor pixels of the sensor may, e.g., have a first size being different from a second size of the photosensitive area of said second one of the photosensitive elements of the sensor pixels. By employing different sized photosensitive areas, improvements with respect to the dynamic range can be achieved.

In an embodiment, the image reconstructor may, e.g., be configured to provide the image by selecting an image candidate from a plurality of image candidates, wherein each of the image candidates comprises a plurality of image pixels. The image reconstructor may, e.g., be configured to transform the image pixels of each of the image candidates to obtain transformed pixels of each of the image candidates. Moreover, the image reconstructor may, e.g., be configured to determine, for each of the image candidates, difference information indicating a difference between the transformed pixels of said image candidate and the first image pixels of the image data provided by the sensor. Moreover, the image reconstructor may, e.g., be configured to select said image candidate from the image candidates, depending on the difference information of each of the image candidates.

According to an embodiment, the image reconstructor is configured to determine said image candidates from the plurality of image candidates by applying the formula

$$\arg \min_{s} \| \Phi \cdot s - y \|_2^2 + \lambda \cdot \mathrm{ME}\{s\}$$

wherein s is a matrix or a vector indicating one of the image candidates, wherein $\Phi$ is a matrix indicating a transformation for transforming said one of the image candidates to obtain transformed pixels of said one of the image candidates, wherein *y* is a matrix or a vector indicating the first image pixels of the image data provided by the sensor, wherein $\Phi \cdot$ *s - y* is a matrix or a vector indicating the difference information of said one of the image candidates, wherein ME{*s*} indicates a model error, and wherein $\lambda$ is a parameter indicating a weighting.

According to an embodiment, the sensor may, e.g., be configured to be employed for 3-D surface scanning.

In an embodiment, the apparatus may, e.g., further comprise one or more modules for transforming electromagnetic radiation into light.

According to an embodiment, a first group of the sensor pixels may, e.g., be configured to provide a first group of the first image pixels of the image data. Moreover, a second group of the sensor pixels may, e.g., be configured to provide a second group of the first image pixels of the image data. In such an embodiment, each of the first image pixels of the first group of the first image pixels is not comprised by the second group of the first image pixels, and each of the first image pixels of the second group of the first image pixels is not comprised by the first group of the first image pixels. The image reconstructor may, e.g., be configured to reconstruct a first portion of the image depending on the first group of the first image pixels and not depending on the second group of the first image pixels. Moreover, the image reconstructor may, e.g., be configured to reconstruct a second portion of the image depending on the second group of the first image pixels and not depending on the first group of the first image pixels.

In an embodiment, the sensor is a first sensor. The apparatus may, e.g., further comprise one or more further sensors. The first sensor and the one or more further sensors may, e.g., be arranged such that they form a multi-layer sensor. Each of the first sensor and the one or more further sensors may, e.g., form a layer of one or more stacked layers of the multi-layer sensor. Each further sensor of the one or more further sensors may, e.g., comprise a plurality of sensor pixels, wherein each of the sensor pixels of said further sensor may, e.g., comprise one or more photosensitive elements, wherein each of the one or more photosensitive elements may, e.g., comprise a photosensitive area, wherein said further sensor may, e.g., be configured to provide image data comprising a plurality of first image pixels, and wherein each of the sensor pixels of said further sensor may, e.g., be configured to provide one of the first image pixels of the image data of said further sensor. The image reconstructor may, e.g., be configured to provide the image as a first image. The image reconstructor may, e.g., be configured to provide one or more further images, wherein each of the one or more further images may, e.g., comprise a plurality of second image pixels, wherein the image reconstructor is configured to generate the second image pixels of each of the one or more further images depending on the first image pixels of the image data provided by one of the one or more further sensors, wherein the number of the first image pixels of the image data provided by said one of the one or more further sensors may, e.g., be smaller than the number of the second image pixels of the image data of said further image. One of the sensor pixels of each of the one or more further sensors may, e.g., comprise two or more photosensitive elements being connected such that said one of the first image pixels provided by said sensor pixel depends on each of the two or more photosensitive elements, or wherein the photosensitive area of a first one of the photosensitive elements of the sensor pixels of each of the one or more further sensors may, e.g., have a first shape being different from a second shape of the photosensitive area of a second one of the photosensitive elements of the sensor pixels of said further sensor. The image reconstructor may, e.g., be configured to generate each of a group of one or more of the second image pixels of each of the one or more further images depending on at least two of the first image pixels provided by one of the one or more further sensors.

According to an embodiment, the image reconstructor may, e.g., be configured to generate a common image from the first image and from the one or more further images.

In an embodiment, each of the one or more photosensitive elements of each of the sensor pixels of the first sensor may, e.g., be configured to convert light having a first wavelength into electrical charge. Each of the one or more photosensitive elements of each of the sensor pixels of the first sensor may, e.g., be configured to not convert light having a second wavelength into electrical charge, the second wavelength being different from the first wavelength. Each of the one or more photosensitive elements of each of the sensor pixels of one of the one or more further sensors may, e.g., be configured to convert light having the second wavelength into electrical charge. Moreover, each of the one or more photosensitive elements of each of the sensor pixels of said one of the one or more further sensors may, e.g.,

be configured to not convert light having the first wavelength into electrical charge.

According to an embodiment, the image reconstructor may, e.g., be configured to transform image pixels of a reference image to obtain transformed pixels of the reference image. The image reconstructor may, e.g., be configured to determine residual data comprising a plurality of difference pixels, wherein each of the difference pixels indicates a difference between one of the first image pixels of the image data provided by the sensor and one of the transformed pixels of the reference image. Moreover, the image reconstructor may, e.g., be configured to generate the second image pixels of the image depending on the difference pixels of the residual data.

In an embodiment, the image reconstructor may, e.g., be configured to transform image pixels of a reference image to obtain transformed pixels of the reference image. The image reconstructor may, e.g., be configured to determine, for the first sensor, first residual data comprising a plurality of difference pixels, wherein each of the difference pixels may, e.g., indicate a difference between one of the first image pixels of the image data provided by the first sensor and one of the transformed pixels of the reference image. Moreover, the image reconstructor may, e.g., be configured to determine, for each further sensor of the one or more further sensors, further residual data comprising a plurality of difference pixels, wherein each of the difference pixels may, e.g., indicate a difference between one of the first image pixels of the image data provided by said further sensor and one of the transformed pixels of the reference image. Furthermore, the image reconstructor may, e.g., be configured to generate the second image pixels of the first image depending on the difference pixels of the first residual data of the first sensor. Moreover, the image reconstructor may, e.g., be configured to generate the second image pixels of each of the one or more further images depending on the difference pixels of the further residual data of one of the one or more further sensor.

Moreover, a multi aperture imaging system according to an embodiment comprising a plurality of optical lenses and at least one apparatus for providing an image as described above is provided. Each of the at least one apparatus comprises a sensor and an image reconstructor. The plurality of optical lenses are configured to project incoming light on the sensor of each of the at least one apparatus.

Such a multi aperture system may, for example, be a "global" image reconstructor, which comprises a plurality of lens systems and which has a single reconstructor.

Furthermore, a method for providing an image is provided. The method comprises:

- Providing image data comprising a plurality of first image pixels by employing a sensor comprising a plurality of sensor pixels, wherein each of the sensor pixels of the sensor comprises one or more photosensitive elements, wherein each of the one or more photosensitive elements comprises a photosensitive area, wherein providing the image data is conducted by providing each of the first image pixels of the image data by one of the sensor pixels. And:

- Providing the image, wherein the image comprises a plurality of second image pixels, wherein providing the image is conducted by generating the second image pixels of the image depending on the first image pixels of the image data, wherein the number of the first image pixels of the image data is smaller than the number of the second image pixels of the image data, wherein providing the image is conducted by generating each of a group of one or more of the second image pixels depending on at least two of the first image pixels.

At least one of the sensor pixels of the sensor comprises two or more photosensitive elements being connected such that said one of the first image pixels provided by said sensor pixel depends on each of the two or more photosensitive elements, or wherein the photosensitive area of a first one of the photosensitive elements of the sensor pixels has a first shape being different from a second shape of the photosensitive area of a second one of the photosensitive elements of the sensor pixels.

Moreover, a computer program for implementing the above-described method when being executed on a computer or signal processor is provided.

According to embodiments, an apparatus, in particular, an image acquisition system, consisting of an image sensor and an image reconstruction procedure is provided. The image sensor is composed of sensor pixels which integrate light over an effective photosensitive area which is shaped in an irregular way, can possibly be non-contiguous, and can possibly vary from pixel to pixel. Thereby, the proposed system can acquire images at a certain resolution using fewer sensor pixels compared to traditional systems. Thereby, acquisition time is reduced, sensitivity is improved, power consumption can be lowered, and the data rate can be reduced. Regarding X-Rays, an X-Ray dose reduction can be achieved.

Some embodiments aim to approximate a Compressive Sensing-based measurement process based on irregularly shaped sensor pixels.

Moreover, embodiments are, e.g., based on CMOS sensor technology. Possible application fields of embodiments may, for example, be natural imaging, such as in digital cameras, optical material inspection, e.g., defect detection in surface treatment processes, high-speed image recording, e.g., in automotive crash testing, X-ray detectors, e.g., for X-ray computed tomography, and many others.

Some embodiments may, e.g., be employed for active 3D image scanning, where metric measurements of the object surface object are obtained utilizing structured light or laser projection techniques. Such an imaging system may, e.g., generally consist of a light source, e.g., a laser, which projects a pattern, e.g., a line or a point structure, and one or more light sensors that detect the reflected light on the object surface. The measurement of the full surface may, e.g., be achieved by projecting different patters or scanning the object's surface, e.g., by a relative movement of the laser line over the object. The displacement of the projected light in the sensor image may e.g., provide information of the metric 3D shape of the object coordinates. The structure of the projected light may, e.g., vary from a single spot and a line to arbitrary patterns: Single laser point projection is commonly used for the measurement of the geometrical distances. Sheet-of-light scanning, where the laser is spread up to a line, allows fast and precise surface measurement for quality control applications, e.g., testing distances, diameters and thicknesses of industrial goods. Projection of intensity modulated patterns like stripes or sinusoidal shapes are convenient for 3D acquisition/digitizing of objects which is required for, e.g., reverse engineering or heritage modeling.

Further embodiments may, e.g., be employed for active 3D image scanning, since on one hand, the pattern can be optimized in order to fulfill the sparsity requirement, and on the other hand, the application of the proposed sensor allows reducing the amount of data. Embodiments may, e.g., be employed for industrial 3D scanning applications where high data acquisition rates are required.

In the following, embodiments of the present invention are described in more detail with reference to the figures, in which:

| | |
|---|---|
| Fig. 1 | illustrates an apparatus for providing an image according to an embodiment, |
| Fig 2 | illustrates an apparatus for providing an image according to another embodiment, |
| Fig. 3a and 3b | illustrate a sensor according to an embodiment, where a sensor pixel is formed by connecting the floating diffusion capacitors of several photodiodes to a common readout point, |
| Fig. 4a and 4b | illustrate a sensor according to another embodiment, where the photodiodes of the sensor pixels are formed in such a way that the photosensitive area has a desired, possibly nonrectangular shape, |
| Fig. 5 | depicts an apparatus employing a multi-layer image sensor according to an embodiment, |
| Fig. 6 | depicts a multi-layer image sensor according to an embodiment, |
| Fig. 7 | depicts a multi-layer image sensor according to another embodiment, |
| Fig. 8 | illustrates an apparatus for providing an image employing image reference data, |
| Fig. 9a | illustrates a concave shape, |
| Fig. 9b | illustrates a convex shape, |
| Fig. 10 | illustrates a multi aperture imaging system according to an embodiment, |
| Fig. 11 | illustrates by a transparent view the apparatus according to another embodiment, wherein the apparatus further comprises a module for transforming electromagnetic radiation into light. |

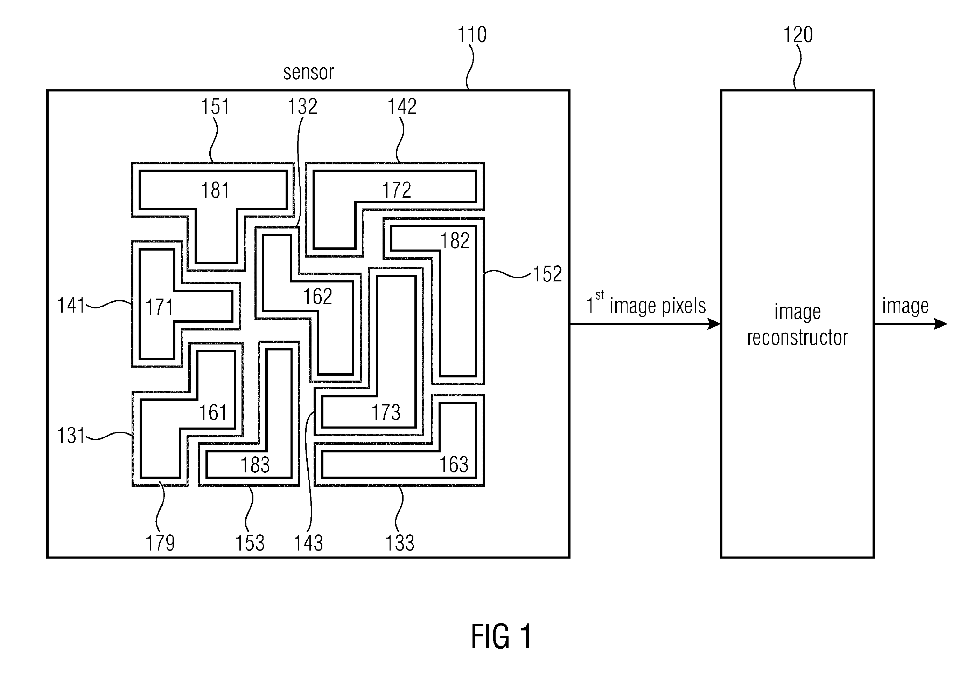

Fig. 1 illustrates an apparatus for providing an image according to an embodiment.

The apparatus comprises a sensor 110 comprising a plurality of sensor pixels, wherein each of the sensor pixels of the sensor 110 comprises one or more photosensitive elements, wherein each of the one or more photosensitive elements comprises a photosensitive area, wherein the sensor 110 is configured to provide image data comprising a plurality of first image pixels, and wherein each of the sensor pixels is configured to provide one of the first image pixels of the image data.

Fig. 1 shows the photosensitive area of each of the photosensitive elements. In Fig. 1, the photosensitive elements have a margin area that is not photosensitive. For example, for photosensitive element 131, reference sign 161 is located within the area of the photosensitive element which is photosensitive, while a margin area 179 of photosensitive element 131 is not photosensitive. In other embodiments, however, the complete surface of the photosensitive element is photosensitive.

Moreover, the apparatus comprises an image reconstructor 120 for providing the image, wherein the image comprises a plurality of second image pixels, wherein the image reconstructor 120 is configured to generate the second image pixels of the image depending on the first image pixels of the image data, wherein the number of the first image pixels of the image data is smaller than the number of the second image pixels of the image data.

The image reconstructor 120 is configured to generate each of a group of one or more of the second image pixels depending on at least two of the first image pixels. This means, for at least some of the second image pixels of the resulting image, more than one of the first image pixels is taken into account when generating one of the second image pixels.

At least one of the sensor pixels of the sensor 110 comprises two or more photosensitive elements being connected such that said one of the first image pixels provided by said sensor pixel depends on each of the two or more photosensitive elements.

Alternatively or additionally, the photosensitive area of a first one of the photosensitive elements of the sensor pixels of the sensor 110 has a first shape being different from a second shape of the photosensitive area of a second one of the photosensitive elements of the sensor pixels, wherein said first shape is concave.

When referring to "photosensitive elements", "sensor pixels", "first image pixels" and "second image pixels" in the following, the terminology is used as follows:

A photosensitive element is characterized in that it comprises a photosensitive area. For example, the photosensitive element may comprise a photosensitive area and a carrying layer on which the photosensitive area is arranged. The photosensitive area may cover a complete surface of the carrying layer. Or, the photosensitive area may cover the surface of the layer only partially.

A sensor pixel is a physical element (hardware), and comprises at least one photosensitive element. A sensor pixel outputs information on a single "first image pixel" (such a "first image pixel" is also referred to as "compressed image pixel" in the following). Such a first image pixel is an information element. For example, a first image pixel may be a "black or white" information, a grayscale value (for example, an integer or real value between 0 and 255) or a color information from a color channel (for example, a red color information, or, for example, a green color information, or, for example, a blue color information). Or, the first image pixel may, for example, provide a value indicating information on a polarization.

Correspondingly, the sensor pixel may, e.g., be sensitive to the intensity of the incoming light, for example, providing grayscale information, or to the intensity in certain wavelength regions or to the polarization of the incoming light.

A sensor pixel provides information on a single first image pixel. This means the information that is provided by the sensor pixel as a first image pixel is not for example, a first grayscale value relating to a first photosensitive element in one location, and a second grayscale value relating to a second photosensitive area in another location. Instead, for example, in embodiments, where two photosensitive elements are connected, to form a single sensor pixel, for example, only one, for example, grayscale value information is output by the sensor pixel as first image pixel, which may, for example, be a combined, for example, averaged, grayscale information, and not one grayscale value for each of the photosensitive elements.

Or, the two photosensitive elements that are connected to form a single sensor pixel may, for example, be two color channels which relate to the same kind of color. For example, two "red" color channels may be connected so that the resulting single sensor pixel only provides a single color value (in this case, a color value providing "red" color information). Likewise, for example, two "green" color channels may be connected so that the resulting single sensor pixel only provides a single "green" color value. And/or, for example, two "blue" color channels may be connected so that the resulting single sensor pixel only provides a single "blue" color value.

Similarly, two photosensitive elements, each of them providing polarization information, may be connected, and the resulting sensor pixel may, e.g., then output a single (e.g., combined) polarization information, and not two separate polarization values.

The information that is provided by the sensor pixel is referred to as a first image pixel (or compressed image pixel).

The image that is finally provided by the apparatus comprises a plurality of image pixels that may be referred to as second image pixels. According to embodiments, the first image pixels provided by the sensor pixels of the sensor are processed by the image reconstructor 120 to obtain the second image pixels of the reconstructed image. As there are fewer first image pixels provided by the sensor pixels than there are second image pixels that form the resulting image, the first image pixels may also be referred to as compressed image pixels. Thus, two or more of the second image pixels are generated by the image reconstructor 120 depending on the same first image pixel provided by one of the sensor pixels.

In an embodiment, at least one of the sensor pixels of the sensor comprises two or more photosensitive elements being connected such that said one of the first image pixels provided by said sensor pixel depends on each of the two or more photosensitive elements.

In Fig. 1, the photosensitive elements 131, 132 and 133 form a first sensor pixel. This first sensor pixel produces exactly one of the first image pixels. For example, photosensitive elements 131, 132 and 133 may be connected (not shown) such that their (e.g., electrical) output signal resulting from transforming incoming light is stored and subsequently read out to obtain an indication of the said one of the first image pixel.

Likewise the photosensitive elements 141, 142, 143 form a second sensor pixel which provides another one of the first image pixels. Analogously, the photosensitive elements 151, 152, 153 form a third sensor pixel which provides a further one of the first image pixels.

Additionally or alternatively, the photosensitive area of a first one of the photosensitive elements of the sensor pixels has a first shape being different from a second shape of the photosensitive area of a second one of the photosensitive elements of the sensor pixels, wherein the first shape is concave.

In Fig. 1, for example, the photosensitive area 161 of photosensitive element 131 has a different shape / is different from the shape of the photosensitive area 171 of photosensitive element 141. Thus, the particular embodiment of Fig. 1 fulfils both requirements, namely that two or more photosensitive elements are connected such that one of the first photosensitive elements depends on these two or more photosensitive elements (and not only on one photosensitive element alone), and also the requirement that the shapes of the photosensitive area of at least some of the photosensitive elements differ.

However, for some embodiments it is sufficient that only one of these requirements are fulfilled. It is beneficial if each of the image pixels result from a differently formed photosensitive area. According to embodiments, the photosensitive area of at least some of the photosensitive elements already differ from each other. It should be noted that some or all of the image pixels may result from sensor pixels that only comprise a single photosensitive element. This may, e.g., be in particular the case when some of the shapes of the photosensitive areas of the different pixel sensors already differ from each other.

Or, in some embodiments, the photosensitive areas of the photosensitive elements do not differ, but the photosensitive areas of two or more pixels are connected, such that the total photosensitive area of the two or more pixel sensors differs from another total photosensitive area of another two or more pixel sensors.

Further embodiments, such as the embodiment illustrated by Fig. 1, combine both approaches. That means that the shapes of the photosensitive areas of at least some of the photosensitive elements differ and two or more photosensitive elements are connected to form a sensor pixel which produces (only) one of the first image pixels.

The terms "concave" and "convex" are well known in science and in the art. E.g., "concave" is the same as "not convex". For example, a shape may be considered as being concave, if at least two points exist within the shape (e.g., including the boundaries of the shape) so that a connecting straight line, starting at the first one of the two points and ending at the second one of the two points is at least partially located outside the shape.

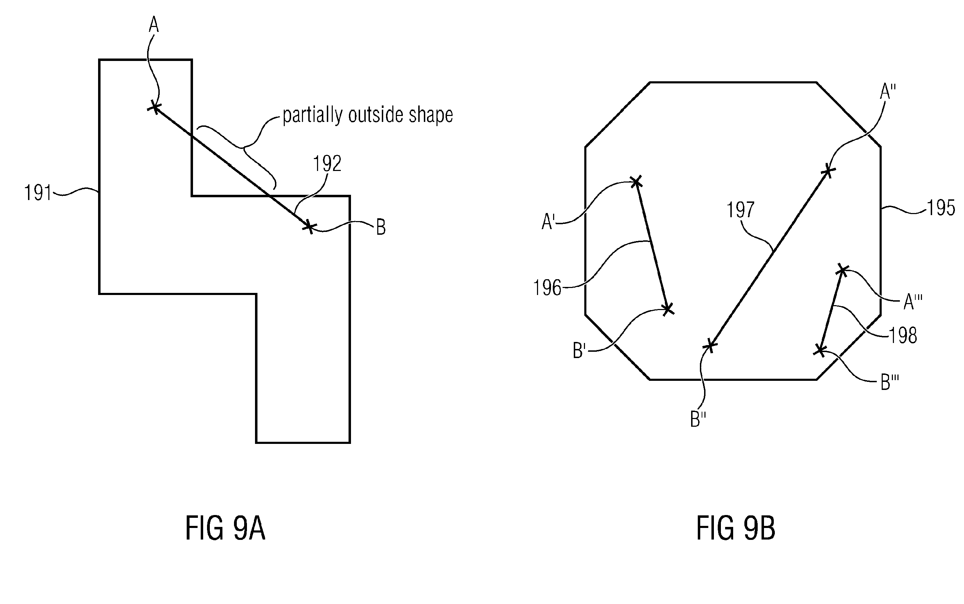

Fig. 9a illustrates a concave shape 191. Two points A, B exist, so that a connecting straight line 192, starting at the first one of the two points and ending at the second one of the two points is (at least) partially located outside the shape.

Fig. 9b illustrates a convex shape 195 (convex means not concave). No two points exist, so that a connecting straight line, starting at the first one of the two points and ending at the second one of the two points is (at least) partially located outside the shape. For example, connecting straight lines 196, 197, 198, starting in points A', A" and A''', respectively, and ending in points B', B" and B''', respectively, are all completely located within the shape.

For example, in Fig. 1, all photosensitive areas 161, 162, 163, 171, 172, 173, 181, 182, 183 are concave. However, in other embodiments, only one or some but not all of the photosensitive areas of the photosensitive elements of the sensor elements of the sensor may be concave, while one or more other photosensitive areas may be convex.

It is particularly advantageous that one or more of the photosensitive areas have a concave shape, because when one or more of the photosensitive areas have this irregular shape, one or more of the first image pixels are derived from irregularly shaped sensor pixels. Obtaining the first image pixels from irregularly shaped sensor pixels allows that a greater number of second image pixels can be derived from the first image pixels, compared to a configuration, where the sensor pixels have a regular (e.g., rectangular or, e.g., square) shape. This effect is moreover enhanced, when the shapes of the photosensitive areas of some of the sensor pixels differ from the shapes of the photosensitive areas of some other of the sensor pixels.

Likewise, photosensitive elements, may, e.g., be connected to form a sensor pixel, and the total photosensitive area of the sensor pixel resulting from the connection that results from this has an irregular shape, which again, results in that a greater number of second image pixels can be derived from the first image pixels, compared to a configuration, where the sensor pixels have a regular shape.

Embodiments are based on the finding that it is beneficial to derive first image pixels from the above-described sensor pixels, as described below.

In a particular embodiment, each one of the sensor pixels of the sensor may, e.g., comprise two or more photosensitive elements being connected such that the first image pixel provided by said sensor pixel depends on each of the two or more photosensitive elements of said sensor pixel. In such an embodiment, every first image pixel depends on at least two photosensitive elements, as each sensor pixel comprises two or more photosensitive elements, and as each sensor pixel produces one of the image pixels depending on all of its photosensitive elements.

According to a particular embodiment, the photosensitive area of each of the photosensitive elements of each of the sensor pixels may, e.g., have a non-rectangular shape. For example, in Fig. 1, all photosensitive areas 161, 162, 163, 171, 172, 173, 181, 182, 183 of all the photosensitive elements 131, 132, 133, 141, 142, 143, 151, 152, 153 of the sensor 110 have a non-rectangular shape. Such a design of the photosensitive elements is particularly advantageous as described below.

Some embodiments provides an apparatus for providing an image (an image acquisition system) which provides an image with a certain number of image pixels $N_I$ obtained from a sensor with a smaller number of sensor pixels $N_S < N_I$. Compared to a traditional image sensor, this allows to increase the size of the photosensitive area of each pixel while maintaining the same overall sensor size, which improves the light sensitivity of the image acquisition system. This can be used to reduce exposure times which allows to acquire faster and to reduce the radiation dose in medical X-ray imaging applications. At the same time, such an apparatus allows to acquire an image at the same resolution as a traditional image sensor with significantly fewer sensor pixels that have to be read out. Therefore, the image can be read out faster since less row readout cycles are required and fewer values need to be digitized and converted to a serial bit stream. Consequently, the sensor can be read out at a higher frequency, which is attractive for high-speed image sensors operating at very high frame rates, or alternatively, the sensor can be read out at the same frequency but with a significantly reduced data rate that has to be transmitted from the sensor and then digitally stored, which reduces the overall power consumption and allows longer recording times in autonomous systems with limited storage capacity.

The reduction to a smaller number of sensor pixels is achieved by using pixels that are shaped in an irregular way, which means that instead of covering the sensor with a matrix of identically shaped, e.g., rectangular, photosensitive elements, the proposed sensor uses sensor pixels that capture light over areas which vary between sensor pixels in their shapes (including, possibly their sizes), are possibly non-rectangular, e.g., made up of a collection of smaller, rectangular subpixels or represent a different shape, and/or are possibly non-contiguous. The sensor therefore captures the incident light in units that are integrated over the irregularly shaped areas that correspond to each sensor pixel. Based on the values read from these sensor pixels, a subsequent reconstruction process finds the image pixels that represent the image, possibly using some application-specific prior knowledge about the types of images that are expected.

From a theoretical perspective it is desirable to allow the sensor pixels to even mutually overlap so that the information about the illumination of a certain part of the sensor area is shared by multiple pixels and influences their readout values.

The underlying idea of the patent can be applied to sensors that are composed of one layer of photosensitive elements or alternatively to sensors that contain several stacked layers of photosensitive elements tuned to different optical wavelengths. For the sake of clarity, these two technologies are separately described.

At first, single-layer sensors are considered.

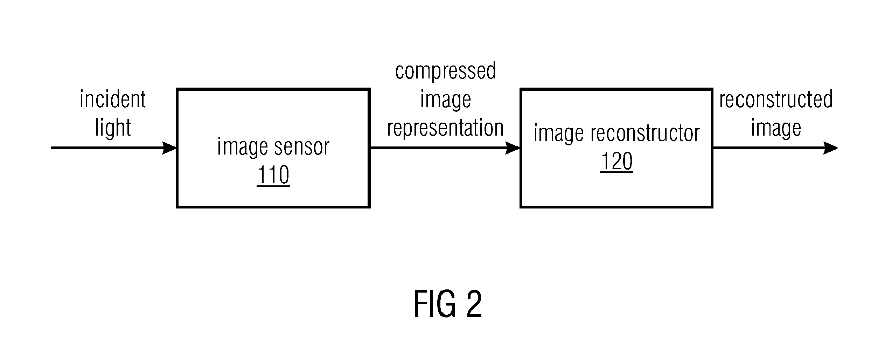

Fig 2 illustrates an apparatus for providing an image according to another embodiment. Incident light illuminates a sensor 110 which is composed of sensor pixels. These sensor pixels are read and converted to a digital sequence of $N_S$ values which constitutes the compressed image representation. An image reconstructor 120 then finds the $N_I$ image pixels that represent the reconstructed image from the compressed image representation.

Some embodiments may, e.g., be realized by employing CMOS (Complementary metal-oxide-semiconductor). Some other embodiments may be realized by CCDs (CCD = charge-coupled device). Other embodiments may be realized without using FDs (FD = Floating Diffusion capacitors) or something similar. So when discussing a realization based on a modification of existing CMOS technology for illustrative purposes below, other embodiments employ other suitable technologies, as understood by a person skilled in the art.

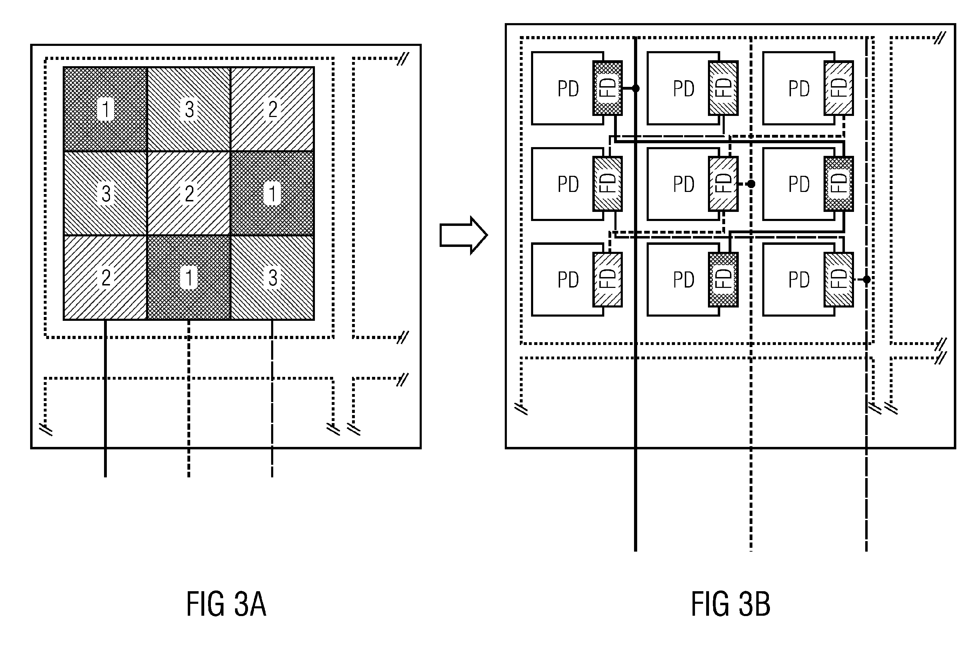

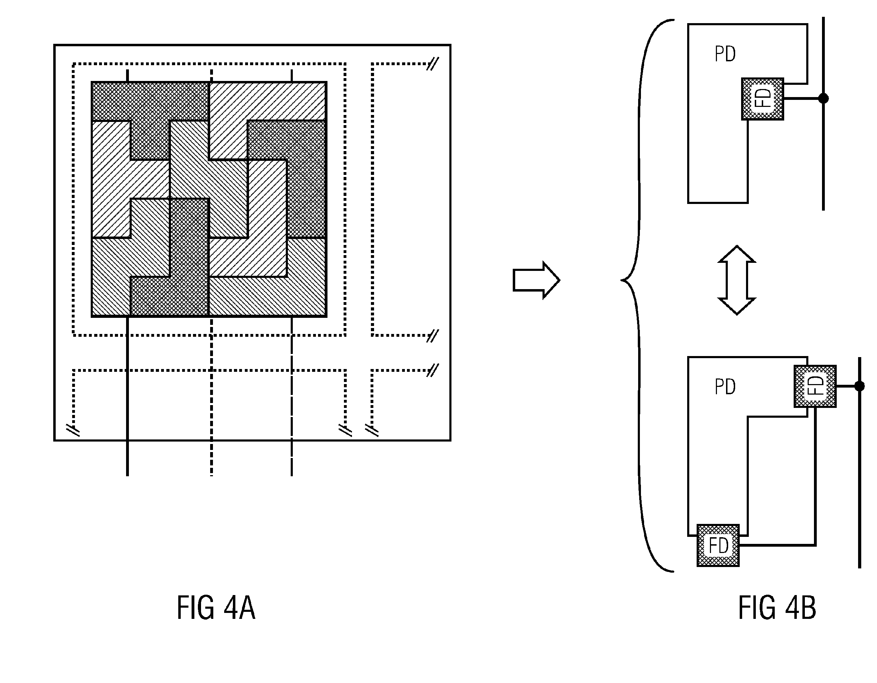

Some embodiments realize the sensor 110 by modifying existing modern CMOS technology are shown in Figs. 3 and 4. Modern CMOS image sensors are realized via a matrix of photosensitive elements (photodiodes (PD)) that after being reset collect light and convert this light into an electrical charge. This charge is then transferred to a capacitor (e.g., a floating diffusion capacitor) which stores the charge. The charge of the floating diffusion capacitors is read by measuring its voltage, for example, by using an amplifying transistor to provide a sufficient current.

Fig. 3a and 3b illustrate a sensor according to an embodiment, where a sensor pixel is formed by connecting the floating diffusion capacitors of several photodiodes to a common readout point. In so doing, the charge of these floating diffusion capacitors is read at once, which provides a voltage value corresponding to the average of the voltage values of the different floating diffusion capacitors. Therefore, this sensor pixel integrates the incident light over an area which corresponds to the union of the areas of all photodiodes that are connected to this sensor pixel. This way, a non-contiguous effective photosensitive area for the sensor pixels can be realized. Fig. 3a shows the principal sensor pixel layout arrangement, whereas Fig. 3b demonstrates a realization based on interconnected floating diffusion capacitors.

Fig. 4a and 4b illustrate a sensor according to another embodiment, where the photodiodes of the sensor pixels are formed in such a way that the photosensitive area has a desired, possibly nonrectangular shape. The shape of the photodiodes may, for example, be the result of a doping and etching process which is based on masks that can be designed quite freely. Therefore, by employing an appropriately designed mask, photodiodes for each sensor pixel may be formed in a desired manner, allowing them to be non-rectangular, non-convex and even to mutually intertwine. As Fig. 4a is only a coarse schematic illustration, the gaps between the photodiodes of adjacent sensor pixels are not shown for simplicity.

In an embodiment, each of the sensor pixels may, e.g., further comprise one or more capacitors, wherein each of the one or more photosensitive elements of each of the sensor pixels may, e.g., be configured to collect light, and to convert the light into electrical charge, and wherein said sensor pixel may, e.g., be configured to transfer said electrical charge into the one or more capacitors of said sensor pixel.

For the readout of the sensor, the charge transfer from the photodiode to the floating diffusion capacitors is very important. It is usually achieved via a transistor that can be switched between a state where its electrical potential blocks the flow of charge from the photodiode to the floating diffusion capacitor (e.g., during exposure) and a second state where the potential is adjusted so that the charge is allowed to flow into the floating diffusion capacitor. The speed at which this transfer proceeds depends on the distribution of the electrical potential through the photodiodes. Since a large photodiode that may potentially be shaped in a non-convex way (e.g., having corners) could possibly lead to a disadvantageous potential distribution through the photodiode. Fig. 4b illustrates possible implementations of these types of sensor pixels.

The floating diffusion capacitor is directly implemented in a suitable corner such that the potential distribution throughout the photodiode becomes more favorable or we can use multiple floating diffusion capacitors per PD and interconnect them in a manner similar to the non-contiguous pixels shown in Fig. 3a and 3b.

It should be noted that the two approaches in Fig. 3a, 3b and in Fig. 4a, 4b can be combined. Thereby, several irregularly shaped PDs and their corresponding floating diffusion capacitors can be connected as well, in order to achieve a sensor pixel made up of non-contiguous, irregularly shaped photosensitive areas.

It should be noted that the output of the sensor pixels, (this output is referred to as first image pixels) indicate a compressed image representation which, due to the irregularly shaped (and possibly intertwining) effective photosensitive areas of the sensor pixels of the embodiments does not necessary look anything like the (final) image that is provided by the image reconstructor 120. Therefore, the first image pixels do not represent the image in a particular resolution, but instead represent compressed image data.

In particular embodiments, the sensor comprises non-contiguous sensor pixels or mutually intertwining pixels.

Returning to Fig. 1 and 2, the image reconstructor 120 receives the compressed image representation (the first image pixels of the image data provided by the sensor 110) as an input and provides the reconstructed image as an output. Mathematically, this can be described by a mapping from a vector of length $N_S$ containing the compressed image representation $\mathbf{y} \in \mathbb{R}^{N_S}$ to a vector of length $N_I$ containing the image pixels of the reconstructed image, which we represent by $\mathbf{s} \in \mathbb{R}^{N_I}$. Since s contains more degrees of freedom than $\mathbf{y}$, this reconstruction is only possible if some prior knowledge on the expected types of image is available. Such prior knowledge could be given by a model, e.g., knowing that the image is sparse (contains few non-zeros), piecewise constant, belongs to a limited set of possible images, becomes sparse after a linear transformation (e.g., a Discrete Wavelet Transform), etc. The reconstruction block can then be described as a method to solve a minimization problem defined as

$$\arg \min_{\mathbf{s}} \|\mathbf{\Phi} \cdot \mathbf{s} - \mathbf{y}\|_2^2 + \lambda \cdot \mathrm{ME}\{\mathbf{s}\}, \tag{1}$$

where ME{s} measures the model error, e.g., if the image is known to be sparse, an $\ell 1$ norm of s can be used to promote sparse solutions. Moreover, $\Phi \in \mathbb{R}^{N_I \times N_S}$ is a matrix which models the imaging process by the irregularly shaped sensor pixels including the integration of the intensity over the known areas of the sensor pixels (note that if the transfer function of the optical subsystem is known, it can be incorporated into $\Phi$ as well, e.g., to model non-idealities of the lens such as an imperfect focus).

Finally, $\lambda$ is a parameter that controls the weighting between the model error and the fit between the observed compressed image representation $\mathbf{y}$ and the estimated compressed image representation $\Phi \cdot \mathbf{s}$. This parameter can be tuned to adjust the trade-off between the model fit and the measurement errors (caused by, e.g., noise). The optimization problem of formula (1) represents a regularized least squares problem, which can be solved by a person skilled in numerical optimization.

In particular, the optimization problem of formula (1) can be solved by iterative methods such as a gradient descent methods.

In a more general embodiment, the image reconstructor 120 may, e.g., be configured to generate each of the second image pixels of the image depending on at least two of the first image pixels.

In an embodiment, the photosensitive area of said first one of the photosensitive elements of the sensor pixels of the sensor 110 may, e.g., have said first shape being different from said second shape of the photosensitive area of said second one of the photosensitive elements of the sensor pixels. In such an embodiment, the photosensitive area of said first one of the photosensitive elements of the sensor pixels of the sensor 110 may, e.g., have a first size being different from a second size of the photosensitive area of said second one of the photosensitive elements of the sensor pixels. By employing different sized photosensitive areas, improvements with respect to the dynamic range can be achieved.

In an embodiment, the image reconstructor 120 may, e.g., be configured to provide the image by selecting an image candidate from a plurality of image candidates, wherein each of the image candidates comprises a plurality of image pixels. The image reconstructor 120 may, e.g., be configured to transform the image pixels of each of the image candidates to obtain transformed pixels of each of the image candidates. Moreover, the image reconstructor 120 may, e.g., be configured to determine, for each of the image candidates, difference information indicating a difference between the transformed pixels of said image candidate and the first image pixels of the image data provided by the sensor. Moreover, the image reconstructor 120 may, e.g., be configured to select said image candidate from the image candidates, depending on the difference information of each of the image candidates.

So according to a particular embodiment, the image reconstructor 120 is configured to determine said image candidates from the plurality of image candidates by applying the formula

$$\arg\min_{s} \|\mathbf{\Phi} \cdot s - y\|_2^2 + \lambda \cdot \mathrm{ME}\{s\}$$

wherein s is a matrix or a vector indicating one of the image candidates, wherein $\Phi$ is a matrix indicating a transformation for transforming said one of the image candidates to obtain transformed pixels of said one of the image candidates, wherein $\boldsymbol{y}$ is a matrix or a vector indicating the first image pixels of the image data provided by the sensor, wherein $\Phi \cdot$ $\boldsymbol{s}$ - $\boldsymbol{y}$ is a matrix or a vector indicating the difference information of said one of the image candidates, wherein ME$\{\boldsymbol{s}\}$ indicates a model error, and wherein $\lambda$ is a parameter indicating a weighting.

Transforming said one of the image candidates to obtain transformed pixels of said one of the image candidates, e.g., means that the second image pixels of said image candidate s are transformed to obtain first image pixels (which are first image pixels corresponding to the second image pixels of the image candidate s).

While the above described formula and the concepts on which it is based are new and inventive, a solution for such a cost function may be obtained by employing standard numerical optimization procedures that are known to a person skilled in the art.

In an embodiment. the set of image candidates is defined to be the set of sparse images. Then, to solve the above inventive equation, a state-of-the-art approach may be employed and the model error function ME may be chosen as the 1-norm of the vector s [DE02] which is the sum of the magnitude of all elements of *s.* In such a case, the cost function is a convex regularized least squares problem. The convex regularized least squares problem may, e.g., be solved by standard algorithms e.g., employing the Least Absolute Shrinkage and Selection Operator (LASSO) [Tib96], the Basis Pursuit Denoising (BPDN) [CDS98], and/or a Projected Gradient algorithm [DDM04], etc.

For example, in an embodiment, the projected gradient algorithm is employed and the image candidate *s* is found in an iterative fashion, starting with, e.g., an empty image, performing gradient steps along the gradient of the norm of the difference information and projecting the intermediate solutions onto the set of image candidates after every step to make sure that we remain within this target set. This projection can for instance be achieved by a thresholding operator. Thresholding operators are, e.g., discussed in [DDM04].

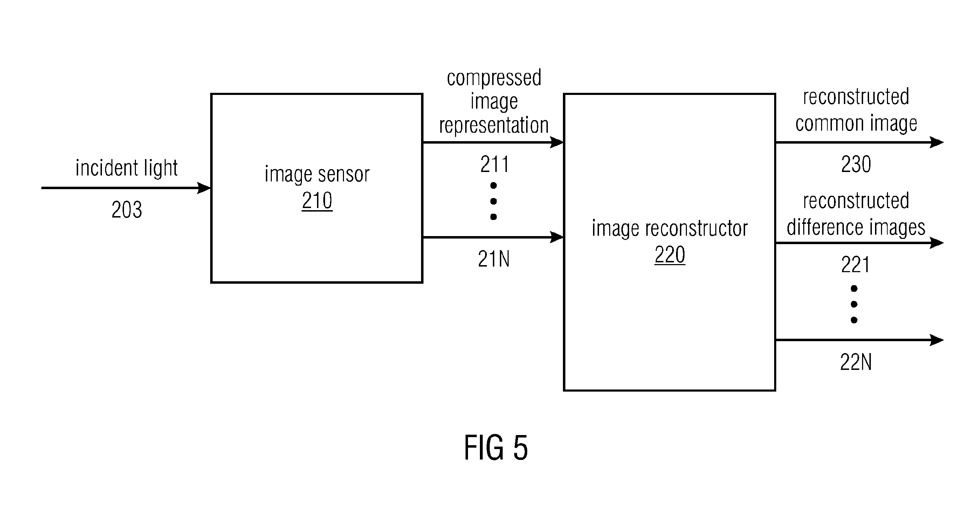

In the following, multi-layer sensors are considered. All particular embodiments above that have been described with reference to a single-layer sensor are equally applicable for a multi-layer sensor with reference to Fig. 5 to 7.

In such an embodiment, the above-described sensor 110 is a first sensor. The apparatus may, e.g., further comprise one or more further sensors. The first sensor 110 and the one or more further sensors may, e.g., be arranged such that they form a multi-layer sensor 210.

Each of the first sensor and the one or more further sensors may, e.g., form a layer of one or more stacked layers of the multi-layer sensor 210.

Each further sensor of the one or more further sensors may, e.g., comprise a plurality of sensor pixels, wherein each of the sensor pixels of said further sensor may, e.g., comprise one or more photosensitive elements, wherein each of the one or more photosensitive elements may, e.g., comprise a photosensitive area, wherein said further sensor may, e.g., be configured to provide image data comprising a plurality of first image pixels, and wherein each of the sensor pixels of said further sensor may, e.g., be configured to provide one of the first image pixels of the image data of said further sensor.

Moreover, in such an embodiment, the image reconstructor 220 may, e.g., be configured to provide the image as a first image. The image reconstructor 220 may, e.g., be configured to provide one or more further images, wherein each of the one or more further images may, e.g., comprise a plurality of second image pixels, wherein the image reconstructor 220 is configured to generate the second image pixels of each of the one or more further images depending on the first image pixels of the image data provided by one of the one or more further sensors, wherein the number of the first image pixels of the image data provided by said one of the one or more further sensors may, e.g., be smaller than the number of the second image pixels of the image data of said further image.

One of the sensor pixels of each of the one or more further sensors may, e.g., comprise two or more photosensitive elements being connected such that said one of the first image pixels provided by said sensor pixel depends on each of the two or more photosensitive elements, or wherein the photosensitive area of a first one of the photosensitive elements of the sensor pixels of each of the one or more further sensors may, e.g., have a first shape being different from a second shape of the photosensitive area of a second one of the photosensitive elements of the sensor pixels of said further sensor.

The image reconstructor 220 may, e.g., be configured to generate each of a group of one or more of the second image pixels of each of the one or more further images depending on at least two of the first image pixels provided by one of the one or more further sensors.

According to an embodiment, the image reconstructor 220 may, e.g., be configured to generate a common image from the first image and from the one or more further images.

In an embodiment, each of the one or more photosensitive elements of each of the sensor pixels of the first sensor may, e.g., be configured to convert light having a first wavelength into electrical charge. Each of the one or more photosensitive elements of each of the sensor pixels of the first sensor may, e.g., be configured to not convert light having a second wavelength into electrical charge, the second wavelength being different from the first wavelength. Each of the one or more photosensitive elements of each of the sensor pixels of one of the one or more further sensors may, e.g., be configured to convert light having the second wavelength into electrical charge. Moreover, each of the one or more photosensitive elements of each of the sensor pixels of said one of the one or more further sensors may, e.g., be configured to not convert light having the first wavelength into electrical charge.

An apparatus according to an embodiment employing a multi-layer sensor 210 is now presented in more detail.

In some embodiments, the above-described concepts may, e.g., be applied to image sensors that consist of several stacked layers of photodiodes which are, e.g., tuned to different optical (e.g., visible light, infrared, etc.) wavelengths, e.g., using the wavelength-dependent penetration depth of the light in silicon.

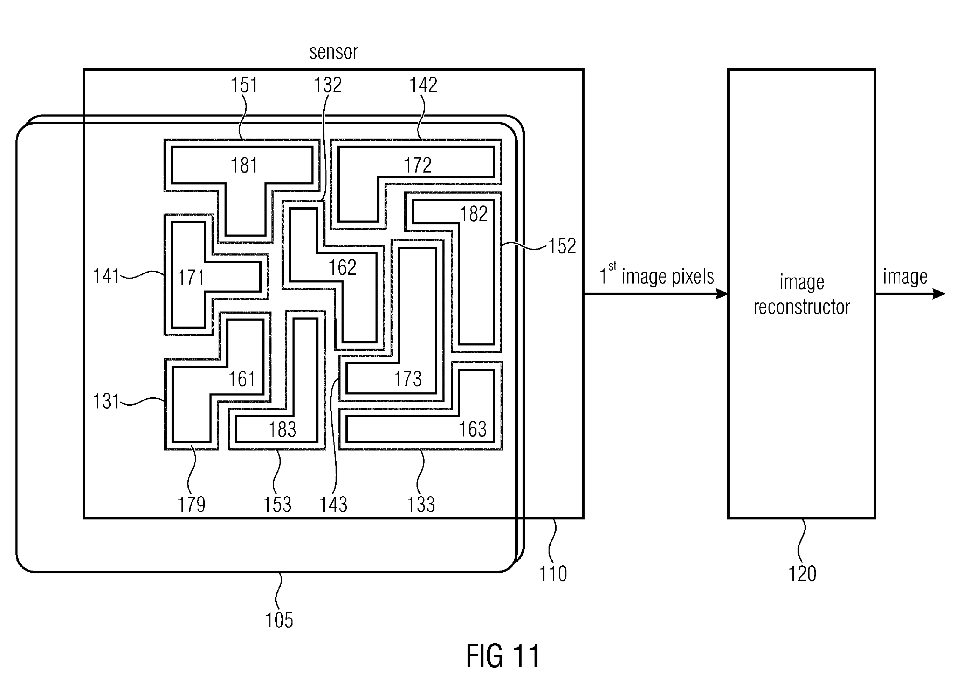

Fig. 11 illustrates by a transparent view the apparatus according to another embodiment, wherein the apparatus further comprises one or more modules 105 for transforming electromagnetic radiation into light. The one or more modules may, for example, be one or more scintillators. Fig. 11 illustrates a scintillator 105 being arranged in front of the sensor 110. In other embodiments, two or more modules for transforming electromagnetic radiation into light may be employed, for example, two or more scintillators.

For example, the above-described concepts may be used for high energetic electromagnetic radiation (e.g. x-rays). For medical x-ray imaging a reduction of the x-ray dose is a major concern. The above described concepts can be used to reduce the dose. For industrial inspection the reduction of test-time and an increase of resolution is a major challenge. In both aspects the above described concepts are advantageous. They are specifically suited for industrial inspection, as the object is known beforehand in many inspection situations.

A further embodiment is the determination of photon-energy in high energetic electromagnetic radiation. In this embodiment two or more layers of detectors are stacked. The individual pixel shape can be varied between the detectors as described above.

In an embodiment, the first sensor layer is used as a detector and filter for lower energy radiation. Further layers of the sensor stack detect higher photon energies. They can be varied in thickness. They form different energy channels. To ease the discrimination of energy, the sensor material and thickness can be varied from layer to layer and additional filters (e.g. copper layers) can be added between the sensor layers.

In such a multi-layer sensor 210, each layer absorbs light in a certain range of wavelengths and allows at least a part of the remaining light to pass to the layer below. In this way, one scene can be viewed in different optical ranges simultaneously. The variations between the intensities recorded at the different layers can be exploited to extract additional information, e.g., seeing through smoke and clouds, identifying parts of the image that belong to persons, animals, or certain objects, or obtaining color information. Since all the different layers see the same scene, there is a significant amount of common information, which we refer to as the common image. Likewise, the deviations between the image in one layer and the common image is called difference image.

Fig. 5 depicts an apparatus employing a multi-layer image sensor according to an embodiment.

The incident light 203 illuminates the image sensor 210. This multi-layer sensor 210 is built by applying the same principles discussed for the single-layer sensor to each layer of the multi-layer sensor 210. Therefore, for a sensor that contains $N \geq 2$ layers, the sensor outputs $N$ compressed image representations 211, 212, . . ., 21$N$. The image reconstructor 220 uses the $N$ compressed image representations to estimate one reconstructed common image 230 as well as N reconstructed difference images (one for leach layer) 221, 222, ..., 22 $N$.

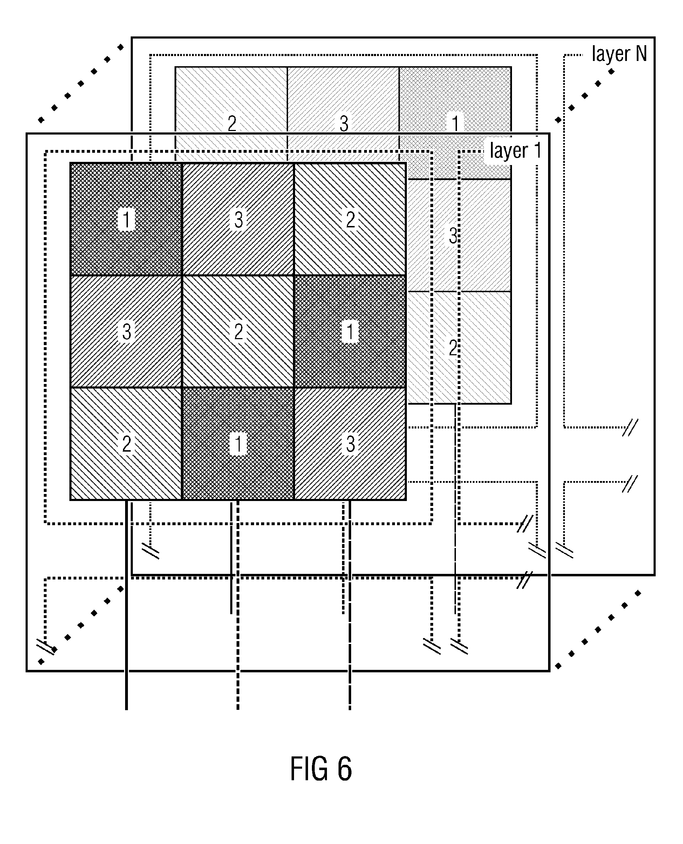

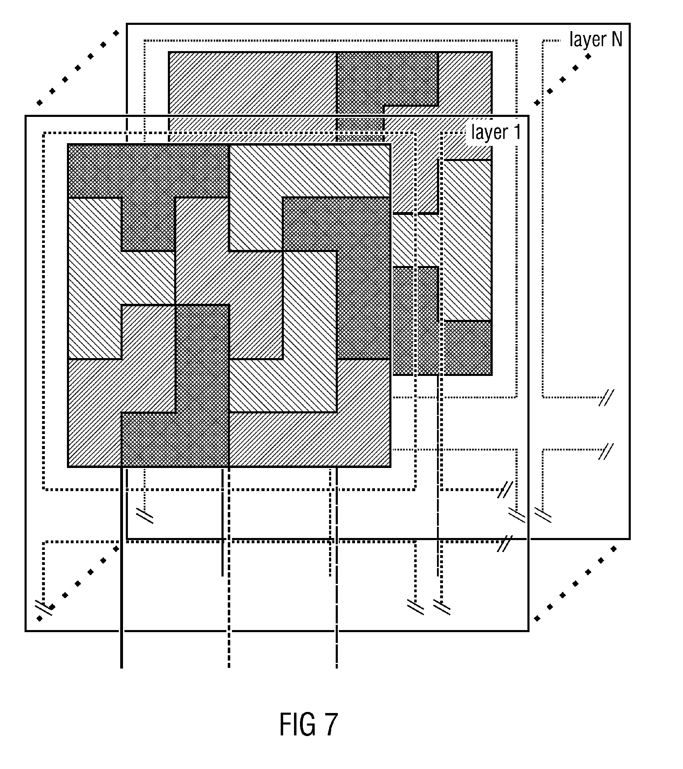

In Fig. 6 and 7, it is shown how the $N$-layer image sensor 210 is built by extending the principles for constructing the single-layer sensor, shown via examples in Fig. 3 and 4, to multiple layers.

Fig. 6 shows the extension of the idea depicted in Figure 3 to multiple layers. In each layer, sensor pixels are constructed with a non-contiguous effective photosensitive area for the sensor pixel, e.g., by connecting floating diffusion capacitors of different photodiodes. The way these interconnections are formed can be varied from layer to layer.

Likewise, the irregularly shaped PDs introduced in Fig. 4 can be applied for each layer of a multi-layer sensor, as shown in Figure 7. It should be noted that the shapes of the photodiodes can be varied from layer to layer. As in the single-layer case, the principles shown in Fig. 6 and 7 can be combined to form sensor pixels which possess irregularly shaped and possibly non-contiguous photosensitive areas, e.g., by connecting the floating diffusion capacitors connected to several, irregularly shaped photodiodes with each other.

The reconstruction block takes the compressed image representations from the $N$ layers as an input and delivers a reconstructed common image as well as $N$ reconstructed difference images, one for each layer. Let $\boldsymbol{y_n}$ be the vector which contains the coefficients of the compressed image representation of the $n$-th layer which possesses $N_{S,n}$ sensor pixels so that $\boldsymbol{y_n} \in \mathbb{R}^{N_{S,n} \times 1}$, where $n = 1, 2, \ldots, N$. Moreover, let $s \in \mathbb{R}^{N_I \times 1}$ be a vector that contains all the image pixels in the reconstructed common image and $\Delta_n \in \mathbb{R}^{N_I \times 1}$ be a vector that contains all the image pixels in the reconstructed difference image for the n-th layer, where n = 1, 2, ... , $N$. As an example, the reconstruction block 202 can be described as a method to solve a minimization problem defined as

$$\underset{s,\boldsymbol{\Delta_1},\boldsymbol{\Delta_2},...,\boldsymbol{\Delta_N}}{\arg\min} \sum_{n=1}^{N} \gamma_n \cdot \left\| \text{ForwardModel}_n\{\boldsymbol{s}, \boldsymbol{\Delta_n}\} - \boldsymbol{y_n} \right\|_2^2 + \lambda \cdot \text{ME}\{\boldsymbol{s}\} + \sum_{n=1}^{N} \lambda_n \cdot \text{MEDiff}\{\boldsymbol{\Delta_n}\},$$

$$(2)$$

where ME$\{s\}$ is the model error for the common image s, similar to the single-layer case, and MEDiff$\{\Delta_n\}$ is the model error for the $n$-th difference image. It should be noted that these functions could possibly be different, e.g., to enforce a smooth common image with sparse difference images.

The function ForwardModel$_n\{s, \Delta_n\}$ expresses the mapping from the common image and the $n$-th difference image to the $n$-th compressed image representation of the $n$-th layer.

An example for a possible set of forward models is given by ForwardModel$_n\{s, \Delta_n\} = \Phi_n \cdot (s + \Delta_n)$, where it is assumed that the difference images can be expressed as an additive quantity and that the mapping from the second image pixels to the first image pixels can be described by a linear process represented by the matrix $\Phi_n$. Finally, the quantities $\lambda, \gamma 1, \gamma 2, ..., \gamma_N, \lambda_1, \lambda_2, ..., \lambda_N$ represent weights that can be used to control the trade-off between the model fit and the measurement errors (caused by, e.g., noise).

In some embodiments, $\Delta_n$ does not appear as an additive. Instead, in an embodiment,
$\Phi_n \cdot (s \cdot \Delta_n)$
is employed, e.g., implementing scaling over layers.

In some embodiments, reference data is used.

In a single-layer sensor embodiment, the image reconstructor 120 may, e.g., be configured to transform image pixels of a reference image to obtain transformed pixels of the reference image. The image reconstructor 120 may, e.g., be configured to determine residual data comprising a plurality of difference pixels, wherein each of the difference pixels indicates a difference between one of the first image pixels of the image data provided by the sensor and one of the transformed pixels of the reference image. Moreover, the image reconstructor 120 may, e.g., be configured to generate the second image pixels of the image depending on the difference pixels of the residual data.

In a multi-layer sensor embodiment, the image reconstructor 220 may, e.g., be configured to transform image pixels of a reference image to obtain transformed pixels of the reference image. The image reconstructor 220 may, e.g., be configured to determine, for the first sensor, first residual data comprising a plurality of difference pixels, wherein each of the difference pixels may, e.g., indicate a difference between one of the first image pixels of the image data provided by the first sensor and one of the transformed pixels of the reference image. Moreover, the image reconstructor 220 may, e.g., be configured to determine, for each further sensor of the one or more further sensors, further residual data comprising a plurality of difference pixels, wherein each of the difference pixels may, e.g., indicate a difference between one of the first image pixels of the image data provided by said further sensor and one of the transformed pixels of the reference image. Furthermore, the image reconstructor 220 may, e.g., be configured to generate the second image pixels of the first image depending on the difference pixels of the first residual data of the first sensor. Moreover, the image reconstructor 220 may, e.g., be configured to generate the second image pixels of each of the one or more further images depending on the difference pixels of the further residual data of one of the one or more further sensor.

This is now explained in more detail. In some applications, reference data is available which means that the reconstructed image is known to be very similar to a known reference image except for some deviations.

For example, in industrial material inspection applications where manufactured pieces are visually checked, there is a reference image against which the reconstructed images are compared. Likewise, in high-speed imaging applications, the deviation from one frame to the next is comparably small so that a previous frame could be used as a reference information for the next frame.

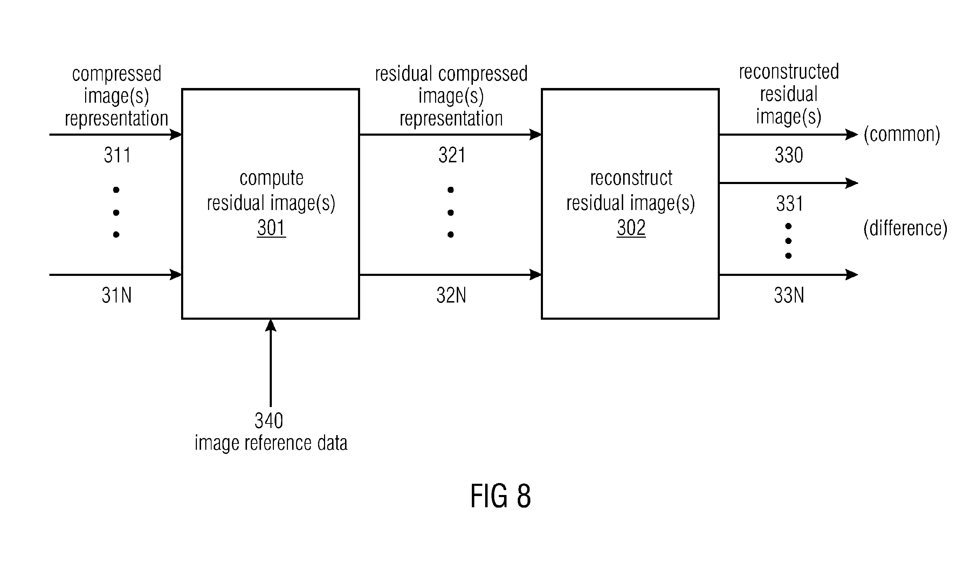

This reference data can be incorporated into the reconstruction process. The main idea is depicted in Fig. 8. Since reference information can be used in the single-layer as well as the multi-layer case, Fig. 8 depicts the more general multi-layer case. The compressed image representations from the $N$ layers of the image sensor 311, 312, ..., 31$N$ are compared with the image reference data 340 to obtain the residual compressed image representations 321, 322,.... 32 $N$. This is accomplished by a residual computation step 301. The task of step 301 is to remove the information of the known image reference data which is contained in the compressed image representations. For example, step 301 could calculate the difference between the observed compressed image representations and a corresponding compressed image representation synthesized from the image reference data (by using the mapping $\Phi_n$ introduced in formula (1) and formula (2), respectively). The goal of the residual computation is to lower the information content in the compressed image representations (by removing known information), which facilitates the reconstruction step.

The reconstruction step 302 maps the residual compressed image representations to reconstructed residual images. In the single-layer case, its output is one reconstructed residual image, whereas, in the $N$ -layer case we have one reconstructed common residual image 330 and $N$ reconstructed difference residual images 331, 332, ..., 32 $N$, for the $N$ layers. By using the reference information, the residual compressed image representations at the input as well as the reconstructed residual images possess less information which simplifies the reconstruction process. For example, if the images differ from the reference image by few isolated points (as it is the case for spotting defects in manufactured pieces such as scratches), the residual images are sparse. This can be exploited in the reconstruction stage by choosing a model error function which promotes sparse solutions.

In some embodiments, the design of the irregularly shaped pixels is performed in such a way that the sensor with $N_S$ sensor pixels is divided into $B$ blocks containing $N_{S,b}$ sensor pixels per block where $\sum_{b=1}^{B} N_{S,b} = N_S$ and the blocks cover a certain region of the images such that different blocks do not overlap each other. For example, the sensor could consist of $\sqrt{B} \times \sqrt{B}$ blocks aligned in rows and columns such that each block covers a rectangular area without any overlaps. Inside each block, the arrangement of sensor pixels is performed in an arbitrary irregular (possibly, non-contiguous) way, as discussed before. Such a design allows the reconstruction of the image to be carried out in such a way that each block is reconstructed independently of all the other blocks. In so doing the reconstruction process may, e.g., speed up significantly, e.g., by leveraging hardware parallelization.

Summarizing such embodiments, a first group of the sensor pixels may, e.g., be configured to provide a first group of the first image pixels of the image data. Moreover, a second group of the sensor pixels may, e.g., be configured to provide a second group of the first image pixels of the image data. In such an embodiment, each of the first image pixels of the first group of the first image pixels is not comprised by the second group of the first image pixels, and each of the first image pixels of the second group of the first image pixels is not comprised by the first group of the first image pixels. The image reconstructor 120; 220 may, e.g., be configured to reconstruct a first portion of the image depending on the first group of the first image pixels and not depending on the second group of the first image pixels. Moreover, the image reconstructor 120; 220 may, e.g., be configured to reconstruct a second portion of the image depending on the second group of the first image pixels and not depending on the first group of the first image pixels.

In some embodiments, the proposed sensor is used for the 3-D surface scanning application, i.e., to capture the reflection of a laser beam projected on the surface of an object with the goal to infer the shape of the surface from the spatial distortion of the known shape of the laser beam. This is a promising application for the proposed image sensor since the images that are projected onto the surfaces are known and can be freely designed. Therefore, a significant amount of information about the images that are recorded is available which enables us to use a model error function that is tailored to facilitate the efficient recovery of the images.

From a technology point of view, the proposed sensor allows to record the image with fewer pixels while achieving the same resolution as a system based on a conventional sensor with a larger number of pixels. Thereby, the acquisition time can be lowered which yields a higher scan rate and thus a reduced scan time. For example, if a laser line beam is projected, the task of the recording unit is to find the position of the observed reflected laser line within the image.

In this case, irregularly shaped larger pixels allow to locate the line with a resolution that is better than the one achieved by an equal number of regularly shaped (rectangular) pixels, since the length of the intersection of the line with the pixel areas (which translates to the amount of collected light) is sensitive to smaller shifts of the line with respect to the pixel center if the pixel area is irregular.

Summarizing the above, in case of a single-layer sensor, methods according to embodiments may, e.g, inter alia, be based on

- Acquiring a compressed image representation using the proposed sensor, which uses

   (a) irregularly shaped photodiodes (PDs), which can be connected to one floating diffusion capacitor or more than one interconnected floating diffusion capacitors, where the PDs' shapes can possibly vary between the PDs and different PDs can possibly mutually intertwine

   (b) interconnected pixels that they are read out as one effective sensor pixel which provides a way to measure the light intensity integrated over a non-contiguous effective photosensitive area composed of the union of the areas of the involved PDs.

   (c) combining the two aforementioned techniques to achieve sensor pixels with irregularly shaped and possibly non-contiguous effective photosensitive areas.

- Reconstructing an image using the compressed image representation, the geometrical information about the effective photosensitive areas of all the sensor pixels, and model information about the images, to obtain a reconstructed image.

In case of a multi-layer sensor, methods according to embodiments may, e.g, inter alia, be based on

- Acquiring $N$ compressed image representations using $N$ layers of the proposed sensor with PDs tuned to different wavelengths, where the layout of the sensor pixels may vary between the different layers, each layer using

   (a) irregularly shaped PDs which can be connected to one or more than one floating diffusion capacitor

   (b) interconnected pixels that achieve non-contiguous effective photosensitive sensor pixel areas

   (c) an arbitrary combination of these two techniques.

- Reconstructing a common image that describes the image information that is common to all layers as well as $N$ difference images which describe the deviations from the common image which are specific to each of the $N$ layers. The reconstruction step uses the $N$ compressed image representations, the geometrical information about the effective photosensitive areas of all the sensor pixels in all layers, model information about the common image, and model information about the $N$ difference images.

An important field of application are multi aperture imaging systems.

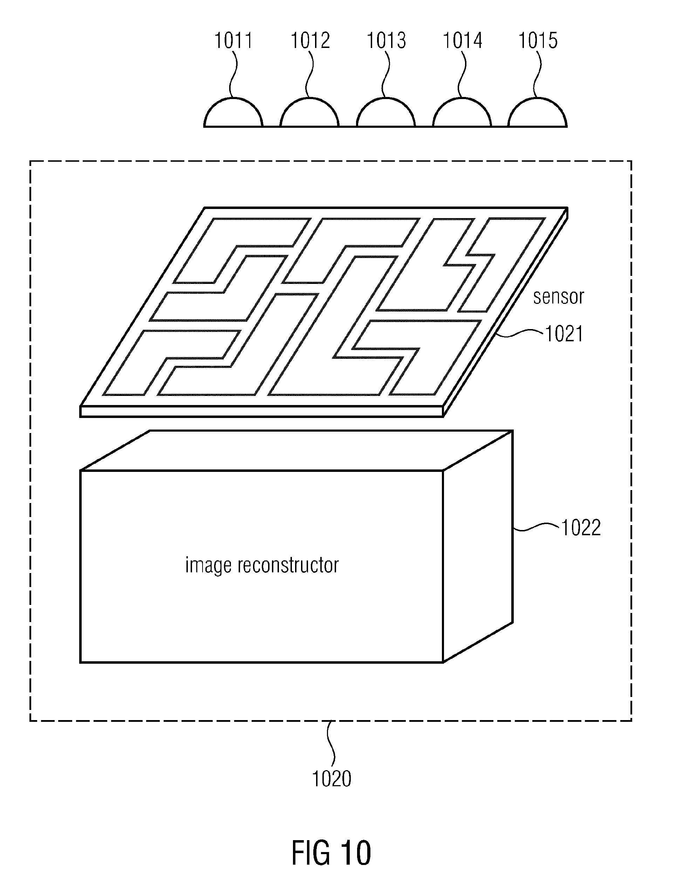

As illustrated in Fig. 10, a multi aperture imaging system according to an embodiment comprises a plurality of optical lenses 1011, 1012, 1013, 1014, 1015, and at least one apparatus 1020 for providing an image as described above. Each of the at least one apparatus 1020 comprises a sensor 1021 and an image reconstructor 1022. The plurality of optical lenses 1011, 1012, 1013, 1014, 1015 are configured to project incoming light on the sensor 1021 of each of the at least one apparatus 1020.

In an embodiment, the multi aperture imaging system comprises only one apparatus for providing an image.

In other embodiments, however, the multi aperture imaging system comprises two or more apparatuses for providing an image and the optical lenses project the incoming light on the sensor of each of the apparatuses. The two or more apparatuses for providing an image then create two or more images. In a particular embodiment, the multi aperture imaging system is then configured to generate a combined image from the two or more created images. The resolution and/or the dynamic range of such a combined image may then be particularly high.

With multi-aperture, multiple images of the same object could be projected to differently shaped pixel areas.

By conducting a combination, an image can be reconstructed with better resolution.

[BRÜCK] (Andreas Bruckner, "Microoptical Multi Aperture Imaging Systems", Dissertation, Friedrich-Schiller-Universitat Jena, 2011) provides background information on multi aperture imaging systems.

According to some embodiments the multi aperture imaging system is configured to conduct optical stiching of segments (see [BRÜCK], p. 75 - 95).

According to other embodiments, the multi aperture imaging system is configured to conduct electronic stiching of segments (see [BRÜCK], p. 53 - 74).

According to further embodiments, the multi aperture imaging system is configured to implement superresolution.

See, in particular, Fig. 3.10 on p. 37 of [BRÜCK].

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

The inventive decomposed signal can be stored on a digital storage medium or can be transmitted on a transmission medium such as a wireless transmission medium or a wired transmission medium such as the Internet.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer or in an embedded system.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[A+04]    E. Aastrand et al. Method and arrangement in a measuring system. Patent No: US 2004 234 118 A1, 2004.

[BE+11]    M. Ben-Ezra et al. Super-resolution in periodic and aperiodic pixel imaging. Patent No: US 7,974,498 B2, 2011.

[DDS13]     M. Dadkhah, M. J. Deen, and S. Shirani. Compressive sensing image sensors-hardware implementation. Sensors, 2013(4):4961-4978, 2013.

[DDT+08]     M. F. Duarte, M. A. Davenport, D. Takhar, J. N. Laska, T. Sun, K. F. Kelly, and R. G. Baraniuk. Single-pixel imaging via compressive sampling. IEEE Signal Processing Magazine, 25(2):83-91, March 2008.

[FTF06]     R. Fergus, A. Torralba, and W. T. Freeman. Random lens imaging. Technical Report MIT-CSAIL-TR-2006-058, MIT, Cambridge, MA, 2006.

[Joh95]     Mattias Johannesson. SIMD Architectures for Range and Radar Imaging. PhD thesis, Linköping University, 1995.

[Kik07]     S. Kikuchi. Arranging a plurality of imaging pixels in an image acquisition apparatus. Patent No: US 7,173,658, 2007.

[MA09]     Y. Maeda and J. Akita. A CMOS image sensor with pseudorandom pixel placement for clear imaging. In International Symposium on Intelligent Signal Processing and Communication Systems (ISPACS 2009), Kanazawa, Japan, December 2009.

[R+86]     H. L. Resnikoff et al. Random array sensing devices. Patent No: US 4,574,311, 1986.

[Rob11]     M. D. Robinson. End-to-end design of superresolution electro-optic imaging systems. Patent No: US 7,889,264 B2, 2011.

[SHS13]     T. Sasao, S. Hiura, and K. Sato. Super-resolution with randomly shaped pixels and sparse regularization. In 2013 IEEE International Conference on Computational Photography (ICCP), Cambridge, MA, April 2013.

[SJ07]     A. Stern and B. Javidi. Random projections imaging with extended space-bandwidth product. IEEE/OSA Journal of Display Technology, 3(3):316-320, September 2007.

[Sla09]     G. B. Slagle. Random-scan, random pixel size imaging system. Patent No: US 7,515,189 B2, 2009.

[T+03]     B. J. Tullis et al. Non-rectilinear sensor arrays for tracking an image. Patent No: US 6,563,101 B1, 2003.

[T+10]     H. Turbell et al. Method and apparatus for determining the amount of scattered light in a machine vision system. Patent No: US 2010 141,946, 2010.

[ZB10]     M. Zhang and A. Bermak. Compressive acquisition CMOS image sensor - from the algorithm solution to hardware implementation. IEEE Transactions on Very Large Scale Integration Systems, 18(3):490-500, March 2010.

[DE02]     D. Donoho and M. Elad, "Optimally sparse representation in general (nonorthogonal) dictionaries via $\ell 1$ minimization" in Proceedings of the National Academy of Sciences of the United States of America, vol. 100, no. 5, pp. 2197-2202, Dec. 2002, doi: 10.1073/pnas.0437847100.

[Tib96]     R. Tibshirani, "Regression shrinkage and selection via the lasso," Journal of the Royal Statistical Society, vol. 58, no. 1, pp. 267-288, 1996.

[CDS98]     S. S. Chen, D. L. Donoho, and M. A. Saunders, "Atomic Decomposition by Basis Pursuit", SIAM Journal on Scientific Computing, 20(1), Jan 1998.

[DDM04]     I. Daubechies, M. Defrise, and C. D. Mol, "An iterative thresholding algorithm for linear inverse problems with a sparsity constraint," Comm. Pure Appl. Math., vol. 57, pp. 1413-1457, 2004.

[BRÜCK]     Andreas Brückner, "Microoptical Multi Aperture Imaging Systems", Dissertation, Friedrich-Schiller-Universitat Jena, 2011.

**Claims**

1.  An apparatus for providing an image, wherein the apparatus comprises:

    a sensor (110) comprising a plurality of sensor pixels, wherein each of the sensor pixels of the sensor (110) comprises one or more photosensitive elements, wherein each of the one or more photosensitive elements comprises a photosensitive area, wherein the sensor (110) is configured to provide image data comprising a plurality of first image pixels, and wherein each of the sensor pixels is configured to provide one of the first image pixels of the image data, and

    an image reconstructor (120; 220) for providing the image, wherein the image comprises a plurality of second image pixels, wherein the image reconstructor (120; 220) is configured to generate the second image pixels of the image depending on the first image pixels of the image data, wherein the number of the first image pixels of the image data is smaller than the number of the second image pixels of the image data, wherein the image reconstructor (120; 220) is configured to generate each of a group of one or more of the second image pixels depending on at least two of the first image pixels,

    wherein at least one of the sensor pixels of the sensor (110) comprises two or more photosensitive elements being connected such that said one of the first image pixels provided by said sensor pixel depends on each of the two or more photosensitive elements, or

    wherein the photosensitive area of a first one of the photosensitive elements of the sensor pixels of the sensor (110) has a first shape being different from a second shape of the photosensitive area of a second one of the photosensitive elements of the sensor pixels, wherein said first shape is concave.

2.  An apparatus according to claim 1, wherein said one of the sensor pixels of the sensor (110) comprises said two or more photosensitive elements being connected such that said one of the first image pixels provided by said sensor pixel depends on each of the two or more photosensitive elements.

3.  An apparatus according to claim 2, wherein each of the sensor pixels of the sensor (110) comprises two or more photosensitive elements being connected such that the first image pixel provided by said sensor pixel depends on each of the two or more photosensitive elements of said sensor pixel.

4.  An apparatus according to one of the preceding claims, wherein the photosensitive area of said first one of the photosensitive elements of the sensor pixels has said first shape being different from said second shape of the photosensitive area of said second one of the photosensitive elements of the sensor pixels.

5.  An apparatus according to one of the preceding claims, wherein the photosensitive area of each of the photosensitive elements of each of the sensor pixels has a non-rectangular shape.

6.  An apparatus according to one of the preceding claims, wherein the image reconstructor (120; 220) is configured to generate each of the second image pixels of the image depending on at least two of the first image pixels.

7.  An apparatus according to one of the preceding claims,
    wherein the photosensitive area of said first one of the photosensitive elements of the sensor pixels of the sensor (110) has said first shape being different from said second shape of the photosensitive area of said second one of the photosensitive elements of the sensor pixels, and
    wherein the photosensitive area of said first one of the photosensitive elements of the sensor pixels of the sensor (110) has a first size being different from a second size of the photosensitive area of said second one of the photosensitive elements of the sensor pixels.

8.  An apparatus according to one of the preceding claims,
    wherein the image reconstructor (120; 220) is configured to provide the image by selecting an image candidate from a plurality of image candidates, wherein each of the image candidates comprises a plurality of image pixels,
    wherein the image reconstructor (120; 220) is configured to transform the image pixels of each of the image candidates to obtain transformed pixels of each of the image candidates,
    wherein the image reconstructor (120; 220) is configured to determine, for each of the image candidates, difference information indicating a difference between the transformed pixels of said image candidate and the first image pixels of the image data provided by the sensor (110), and
    wherein the image reconstructor (120; 220) is configured to select said image candidate from the image candidates, depending on the difference information of each of the image candidates.

9. An apparatus according to claim 8, wherein the image reconstructor (120; 220) is configured to determine said image candidates from the plurality of image candidates by applying the formula

$$\arg\min_{s} \|\mathbf{\Phi} \cdot \boldsymbol{s} - \boldsymbol{y}\|_2^2 + \lambda \cdot \mathrm{ME}\{\boldsymbol{s}\}$$

wherein s is a matrix or a vector indicating one of the image candidates,
wherein $\Phi$ is a matrix indicating a transformation for transforming said one of the image candidates to obtain transformed pixels of said one of the image candidates,
wherein $\boldsymbol{y}$ is a matrix or a vector indicating the first image pixels of the image data provided by the sensor (110),
wherein $\Phi \cdot \boldsymbol{s} - \boldsymbol{y}$ is a matrix or a vector indicating the difference information of said one of the image candidates,
wherein $\mathrm{ME}\{\boldsymbol{s}\}$ indicates a model error, and
wherein $\lambda$ is a parameter indicating a weighting.

10. An apparatus according to one of the preceding claims,
wherein a first group of the sensor pixels is configured to provide a first group of the first image pixels of the image data,
wherein a second group of the sensor pixels is configured to provide a second group of the first image pixels of the image data,
wherein each of the first image pixels of the first group of the first image pixels is not comprised by the second group of the first image pixels,
wherein each of the first image pixels of the second group of the first image pixels is not comprised by the first group of the first image pixels,
wherein the image reconstructor (120; 220) is configured to reconstruct a first portion of the image depending on the first group of the first image pixels and not depending on the second group of the first image pixels, and
wherein the image reconstructor (120; 220) is configured to reconstruct a second portion of the image depending on the second group of the first image pixels and not depending on the first group of the first image pixels.

11. An apparatus according to one of the preceding claims, wherein the sensor (110) is configured to be employed for 3-D surface scanning.

12. An apparatus according to one of the preceding claims, wherein the apparatus further comprises one or more modules (105) for transforming electromagnetic radiation into light.

13. An apparatus according to one of the preceding claims,
wherein the sensor (110) is a first sensor, and
wherein the apparatus further comprises one or more further sensors,
wherein the first sensor and the one or more further sensors are arranged such that they form a multi-layer sensor (210),
wherein each of the first sensor and the one or more further sensors forms a layer of one or more stacked layers of the multi-layer sensor (210),
wherein each further sensor of the one or more further sensors comprises a plurality of sensor pixels, wherein each of the sensor pixels of said further sensor comprises one or more photosensitive elements, wherein each of the one or more photosensitive elements comprises a photosensitive area, wherein said further sensor is configured to provide image data comprising a plurality of first image pixels, and wherein each of the sensor pixels of said further sensor is configured to provide one of the first image pixels of the image data of said further sensor,
wherein the image reconstructor (220) is configured to provide the image as a first image,
wherein the image reconstructor (220) is configured to provide one or more further images, wherein each of the one or more further images comprises a plurality of second image pixels, wherein the image reconstructor (220) is configured to generate the second image pixels of each of the one or more further images depending on the first image pixels of the image data provided by one of the one or more further sensors, wherein the number of the first image pixels of the image data provided by said one of the one or more further sensors is smaller than the number of the second image pixels of the image data of said further image,
wherein one of the sensor pixels of each of the one or more further sensors comprises two or more photosensitive elements being connected such that said one of the first image pixels provided by said sensor pixel depends on each of the two or more photosensitive elements, or wherein the photosensitive area of a first one of the photosensitive elements of the sensor pixels of each of the one or more further sensors has a first shape being different from a second shape of the photosensitive area of a second one of the photosensitive elements of the sensor pixels of said further sensor, and
wherein the image reconstructor (220) is configured to generate each of a group of one or more of the second image pixels of each of the one or more further images depending on at least two of the first image pixels provided by one of the one or more further sensors.

14. An apparatus according to claim 13, wherein the image reconstructor (220) is configured to generate a common image from the first image and from the one or more further images.

15. An apparatus according to claim 13 or 14,
wherein each of the one or more photosensitive elements of each of the sensor pixels of the first sensor is configured to convert light having a first wavelength into electrical charge,
wherein each of the one or more photosensitive elements of each of the sensor pixels of the first sensor is configured to not convert light having a second wavelength into electrical charge, the second wavelength being different from the first wavelength,
wherein each of the one or more photosensitive elements of each of the sensor pixels of one of the one or more further sensors is configured to convert light having the second wavelength into electrical charge, and
wherein each of the one or more photosensitive elements of each of the sensor pixels of said one of the one or more further sensors is configured to not convert light having the first wavelength into electrical charge.

16. An apparatus according to one of claims 1 to 12,
wherein the image reconstructor (120; 220) is configured to transform image pixels of a reference image to obtain transformed pixels of the reference image,
wherein the image reconstructor (120; 220) is configured to determine residual data comprising a plurality of difference pixels, wherein each of the difference pixels indicates a difference between one of the first image pixels of the image data provided by the sensor and one of the transformed pixels of the reference image, and
wherein the image reconstructor (120; 220) is configured to generate the second image pixels of the image depending on the difference pixels of the residual data.

17. An apparatus according to one of claims 13 to 15,
wherein the image reconstructor (120; 220) is configured to transform image pixels of a reference image to obtain transformed pixels of the reference image,
wherein the image reconstructor (120; 220) is configured to determine, for the first sensor, first residual data comprising a plurality of difference pixels, wherein each of the difference pixels indicates a difference between one of the first image pixels of the image data provided by the first sensor and one of the transformed pixels of the reference image,
wherein the image reconstructor (120; 220) is configured to determine, for each further sensor of the one or more further sensors, further residual data comprising a plurality of difference pixels, wherein each of the difference pixels indicates a difference between one of the first image pixels of the image data provided by said further sensor and one of the transformed pixels of the reference image,
wherein the image reconstructor (120; 220) is configured to generate the second image pixels of the first image depending on the difference pixels of the first residual data of the first sensor, and
wherein the image reconstructor (120; 220) is configured to generate the second image pixels of each of the one or more further images depending on the difference pixels of the further residual data of one of the one or more further sensor.

18. A multi aperture imaging system, comprising:

a plurality of optical lenses (1011, 1012, 1013, 1014, 1015), and
at least one apparatus (1020) according to one of claims 1 to 17 for providing an image, wherein each of the at least one apparatus (1020) comprises a sensor (1021) and an image reconstructor (1022),
wherein the plurality of optical lenses (1011, 1012, 1013, 1014, 1015) are configured to project incoming light on the sensor (1021) of each of the at least one apparatus (1020).

19. A method for providing an image, wherein the method comprises:

providing image data comprising a plurality of first image pixels by employing a sensor comprising a plurality of sensor pixels, wherein each of the sensor pixels of the sensor comprises one or more photosensitive elements, wherein each of the one or more photosensitive elements comprises a photosensitive area, wherein providing the image data is conducted by providing each of the first image pixels of the image data by one of the sensor pixels, and

providing the image, wherein the image comprises a plurality of second image pixels, wherein providing the image is conducted by generating the second image pixels of the image depending on the first image pixels of the image data, wherein

the number of the first image pixels of the image data is smaller than the number of the second image pixels of the image data, wherein providing the image is conducted by generating each of a group of one or more of the second image pixels depending on at least two of the first image pixels,

wherein at least one of the sensor pixels of the sensor comprises two or more photosensitive elements being connected such that said one of the first image pixels provided by said sensor pixel depends on each of the two or more photosensitive elements, or

wherein the photosensitive area of a first one of the photosensitive elements of the sensor pixels of the sensor has a first shape being different from a second shape of the photosensitive area of a second one of the photosensitive elements of the sensor pixels, wherein said first shape is concave.

20. A computer program for implementing the method of claim 19 when being executed on a computer or signal processor.

FIG 1

EP 2 985 992 A1

incident
light

image sensor
110

compressed
image
representation

image reconstructor
120

reconstructed
image

FIG 2

FIG 3B

FIG 3A

FIG 4B

FIG 4A

FIG 5

FIG 6

FIG 7

FIG 8

EP 2 985 992 A1

partially outside shape

FIG 9A

FIG 9B

EP 2 985 992 A1

1011    1012    1013    1014    1015

sensor
1021

1022

image reconstructor

1020

FIG 10

FIG 11

Europäisches
Patentamt

European
Patent Office

Office européen
des brevets

# EUROPEAN SEARCH REPORT

Application Number

EP 14 18 0880

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2004/021698 A1 (PHILIPS INTELLECTUAL PROPERTY [DE]; KONINKL PHILIPS ELECTRONICS NV [NL] 11 March 2004 (2004-03-11) | 1-8, 10-20 | INV.<br>H04N5/369<br>H04N5/3745 |
| A | * page 1, line 14 - page 2, line 1 *<br>* page 5, line 26 - page 7, line 29 *<br>* figures 2-6 * | 9 | |
| Y | WO 2013/131851 A2 (THOMSON LICENSING [FR]) 12 September 2013 (2013-09-12) | 1-8, 10-20 | |
| A | * page 4, line 29 - page 8, line 17 *<br>* figure 1 * | 9 | |
| Y | US 8 315 476 B1 (GEORGIEV TODOR G [US] ET AL) 20 November 2012 (2012-11-20)<br>* column 2, line 6 - line 23 *<br>* figure 2 * | 10,18 | |
| Y | US 2013/075607 A1 (BIKUMANDLA MANOJ [US] ET AL) 28 March 2013 (2013-03-28)<br>* paragraph [0024] *<br>* paragraph [0030] *<br>* paragraph [0070] - paragraph [0072] *<br>* figures 4,9 * | 13-15,17 | TECHNICAL FIELDS SEARCHED (IPC) <br><br>H04N |
| A,D | US 7 974 498 B2 (BEN-EZRA MOSHE [IL] ET AL) 5 July 2011 (2011-07-05)<br>* the whole document * | 1-20 | |

The present search report has been drawn up for all claims

| Place of search | Date of completion of the search | Examiner |
|---|---|---|
| The Hague | 30 January 2015 | Didierlaurent, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 0880

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2015

| Patent document cited in search report | | Publication date | Patent family member(s) | | Publication date |
|---|---|---|---|---|---|
| WO 2004021698 | A1 | 11-03-2004 | AU | 2003255921 A1 | 19-03-2004 |
| | | | DE | 10240062 A1 | 11-03-2004 |
| | | | EP | 1537729 A1 | 08-06-2005 |
| | | | JP | 2005537478 A | 08-12-2005 |
| | | | US | 2005242270 A1 | 03-11-2005 |
| | | | WO | 2004021698 A1 | 11-03-2004 |
| WO 2013131851 | A2 | 12-09-2013 | CN | 104160421 A | 19-11-2014 |
| | | | EP | 2823460 A2 | 14-01-2015 |
| | | | WO | 2013131851 A2 | 12-09-2013 |
| US 8315476 | B1 | 20-11-2012 | NONE | | |
| US 2013075607 | A1 | 28-03-2013 | TW | 201316502 A | 16-04-2013 |
| | | | US | 2013075607 A1 | 28-03-2013 |
| US 7974498 | B2 | 05-07-2011 | US | 2009046952 A1 | 19-02-2009 |
| | | | WO | 2009021224 A1 | 12-02-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004234118 A1
- US 7974498 B2
- US 2011 B2
- US 7173658 B
- US 4574311 A
- US 7889264 B2
- US 7515189 B2
- US 6563101 B1
- US 2010141946 A

### Non-patent literature cited in the description

- **M. DADKHAH ; M. J. DEEN ; S. SHIRANI.** Compressive sensing image sensors-hardware implementation. *Sensors,* 2013, 4961-4978
- **M. F. DUARTE ; M. A. DAVENPORT ; D. TAKHAR ; J. N. LASKA ; T. SUN ; K. F. KELLY ; R. G. BARANIUK.** Single-pixel imaging via compressive sampling. *IEEE Signal Processing Magazine,* March 2008, vol. 25 (2), 83-91
- **R. FERGUS ; A. TORRALBA ; W. T. FREEMAN.** Random lens imaging. *Technical Report MIT-CSAIL-TR-2006-058, MIT, Cambridge, MA,* 2006
- **MATTIAS JOHANNESSON.** SIMD Architectures for Range and Radar Imaging. *PhD thesis,* 1995
- **Y. MAEDA ; J. AKITA.** A CMOS image sensor with pseudorandom pixel placement for clear imaging. *International Symposium on Intelligent Signal Processing and Communication Systems,* December 2009
- **T. SASAO ; S. HIURA ; K. SATO.** Super-resolution with randomly shaped pixels and sparse regularization. *2013 IEEE International Conference on Computational Photography,* April 2013
- **A. STERN ; B. JAVIDI.** Random projections imaging with extended space-bandwidth product. *IEEE/OSA Journal of Display Technology,* September 2007, vol. 3 (3), 316-320
- **M. ZHANG ; A. BERMAK.** Compressive acquisition CMOS image sensor - from the algorithm solution to hardware implementation. *IEEE Transactions on Very Large Scale Integration Systems,* March 2010, vol. 18 (3), 490-500
- **D. DONOHO ; M. ELAD.** Optimally sparse representation in general (nonorthogonal) dictionaries via $\ell 1$ minimization. *Proceedings of the National Academy of Sciences of the United States of America,* December 2002, vol. 100 (5), 2197-2202
- **R. TIBSHIRANI.** Regression shrinkage and selection via the lasso. *Journal of the Royal Statistical Society,* 1996, vol. 58 (1), 267-288
- **S. S. CHEN ; D. L. DONOHO ; M. A. SAUNDERS.** Atomic Decomposition by Basis Pursuit. *SIAM Journal on Scientific Computing,* January 1998, vol. 20 (1
- **I. DAUBECHIES ; M. DEFRISE ; C. D. MOL.** An iterative thresholding algorithm for linear inverse problems with a sparsity constraint. *Comm. Pure Appl. Math.,* 2004, vol. 57, 1413-1457
- **ANDREAS BRÜCKNER.** Microoptical Multi Aperture Imaging Systems. *Dissertation,* 2011